(19) Europäisches Patentamt / European Patent Office / Office européen des brevets

(11) **EP 3 495 905 A2**

(12) **EUROPEAN PATENT APPLICATION**

(43) Date of publication:
**12.06.2019 Bulletin 2019/24**

(51) Int Cl.:
**G05B 19/418** (2006.01)   **G05B 23/02** (2006.01)

(21) Application number: **18208196.8**

(22) Date of filing: **26.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2017   JP 2017227129**

(71) Applicant: **Yokogawa Electric Corporation**
**Musashino-shi**
**Tokyo 180-8750 (JP)**

(72) Inventors:
• **KURODA, Tomohiro**
  **Musashino-shi, Tokyo 180-8750 (JP)**
• **FUKUZAWA, Mitsunori**
  **Musashino-shi, Tokyo 180-8750 (JP)**
• **KAMADA, Ken'ichi**
  **Musashino-shi, Tokyo 180-8750 (JP)**

(74) Representative: **Grünecker Patent- und Rechtsanwälte**
**PartG mbB**
**Leopoldstraße 4**
**80802 München (DE)**

(54) **OPERATIONAL IMPROVEMENT EFFECT CALCULATION DEVICE, OPERATIONAL IMPROVEMENT EFFECT CALCULATION METHOD AND RECORDING MEDIUM**

(57)    An operational improvement effect calculation method includes: retrieving, from inputted plant operation data relating to operations of a plant, comparison target plant operation data which includes more than one plant operation data points similar to a plant operation indicated by evaluation target plant operation data which is plant operation data of an evaluation target; calculating a post-improvement evaluation indicator based on the evaluation target plant operation data and a pre-improvement evaluation indicator based on each of the comparison target plant operation data; calculating a confidence interval, based on each data point of the comparison target plant operation data; calculating a baseline, which is a reference when comparing the post-improvement evaluation indicator and the pre-improvement evaluation indicator and corresponds to the pre-improvement evaluation indicator, based on the confidence interval; and calculating an evaluation result on the plant, based on the post-improvement evaluation indicator and the baseline.

FIG. 1

EP 3 495 905 A2

**Description**

TECHNICAL FIELD

The present disclosure relates to an operational improvement effect calculation device, an operational improvement effect calculation method, an operational improvement effect calculation program, and a recording medium.

BACKGROUND ART

In the related art, for plants such as a petroleum plant, a petrochemical plant, a pulp and paper mill, an iron and steel plant, a sewage plant and the like, a variety of improvement measures such as energy saving and improvement on production efficiency have been performed so as to improve operations. As specific examples of the energy saving measures, change of an existing facility to an energy saving facility, optimization of schedules of operation and stop of an equipment, and the like may be exemplified. Also, as specific examples of the improvement measures for improving the production efficiency, change to a high-efficient facility, introduction of a control system such as a distributed control system (DCS) and the like may be exemplified.

For the plant, it is requisite to estimate (confirm) the energy saving effect and the production efficiency improvement effect obtained as a result of the improvement measures for measuring the effect after introducing the improvement measures. Here, as an indicator of measuring the effect of the improvement measures, a key performance indicator (KPI) such as production cost and yield, energy efficiency and the like may be exemplified.

However, in the current operating conditions after performing the improvement measures, it is very difficult to measure (check) what level the KPI was when a plant characteristic remains as it is before performing the improvement measures. That is, the improvement measures are performed, so that it is not possible to easily obtain how much the improvement has been achieved, as compared to the situation before performing the improvement measures. Since the operation is performed in the plant under influences of diverse external factors, there occurs no situation where the operation conditions before performing the improvement measures and the operation conditions after performing the improvement measures completely coincide with each other, including the influences of diverse external factors. Also, when the facility is once changed (updated) by performing the improvement measures, it is not possible to easily return the facility to the original facility, i.e., the state before performing the improvement measures. For this reason, there is a need for any method for estimating the KPI, which was the plant characteristic before performing the improvement measures, in the operating conditions after performing the improvement measures for the plant.

Therefore, for example, Patent Document 1 (Japanese Patent Application Laid-Open Publication No. 2012-38054) and Patent Document 2 (Japanese Patent Application Laid-Open Publication No. 2017-118795) disclose technologies for evaluating an effect of the improvement measures. Patent Document 1 discloses a technology of a plant operation evaluation device configured to estimate a plant operation before performing energy saving measures by using a statistical model and to compare the estimated plant operation and an actual plant operation after performing the energy saving measures, thereby evaluating an energy saving effect. More specifically, according to the technology disclosed in Patent Document I, a plant operation estimation model, which is a statistical model, is prepared on the basis of plant operation values relating to the plant operation before the energy saving measures. Here, according to the technology disclosed in Patent Document 1, a correlation formula, a characteristic formula and a mass balance formula of the plant operation before the energy saving measures are defined in advance to prepare the plant operation estimation model. According to the technology disclosed in Patent Document 1, plant operation values relating to the plant operation after the energy saving measures are applied to the prepared plant operation estimation model, so that the plant operation before the energy saving measures is estimated during a predetermined time period after the energy saving measures. Thereafter, according to the technology disclosed in Patent Document 1, the estimated plant operation before the energy saving measures and the plant operation values after the energy saving measures are compared to evaluate the energy saving effect in the plant.

Also, Patent Document 2 discloses a technology of a power management device configured to evaluate a reduction amount of energy cost associated with operation improvement of a power-generating facility by using a characteristic formula. More specifically, according to the technology disclosed in Patent Document 2, a characteristic formula of fuel consumption characteristics in the plant is obtained on the basis of a change in electric power demand of the conventional control and a change in energy cost of the conventional control. Then, according to the technology disclosed in Patent Document 2, an electric power demand value on operation improvement date is applied to the obtained characteristic formula, so that the energy cost is calculated when performing the conventional control upon the electric power demand on operation improvement date. Also, according to the technology disclosed in Patent Document 2, the calculated energy cost is set as a baseline of a comparison reference.

In this way, according to the technology disclosed in Patent Document 1 or Patent Document 2, the statistical model or characteristic formula of the plant obtained from the operating conditions before performing the improvement measures is applied to the operating conditions after performing the improvement measures, so that the improvement effect after performing the improvement measures is estimated (checked).

There are a variety of plants, for example, a so-called BTG plant configured to manufacture a product by a boiler, a steam-turbine, a generator and the like, a chemical plant configured to manufacture a product by using a complex chemical reaction of chemicals, a microbial plant configured to manufacture a product by performing processing processes of using microbes, and the like.

Since the BTG plant is a plant of which production characteristics with respect to the operating conditions (demand, product quality, raw material quality, and the like) are relatively clear, the KPI characteristic with respect to the operating conditions has strong linearity. For this reason, in the case of the BTG plant, there is little variation in the KPI estimated from the plant characteristics before performing the improvement measures by the method using the statistical model or characteristic formula disclosed in Patent Document 1 or Patent Document 2, so that it is possible to estimate (check) the improvement effect after performing the improvement measures with the sufficient precision.

On the other hand, in the case of the chemical plant or the microbial plant, since the characteristics with respect to the operating conditions (demand, product quality, raw material quality, and the like) has large variations, it is difficult to prepare the statistical model or characteristic formula having high precision, and the variation of the KPI estimated from the plant characteristics before performing the improvement measures also increases. The reason is described. In the chemical plant or the microbial plant, since the complex chemical reaction or biological response of which internal state cannot be checked is used, the amounts and qualities of products to be produced have variations even at the same operating conditions. For this reason, in the case of the chemical plant or the microbial plant, it is not possible to prepare the statistical model or the characteristic formula as disclosed in Patent Document 1 or Patent Document 2 with the sufficient precision. For this reason, in the case of the chemical plant or the microbial plant, even when the KPI is estimated by modeling the characteristics based on data before performing the improvement measures with the method of using the statistical model or the characteristic formula as disclosed in Patent Document 1 or Patent Document 2, it is not possible to estimate (check) the improvement effect with the sufficient precision. Also, in the case of the chemical plant or the microbial plant, it is difficult to prepare a physical model indicative of the characteristics of the plant, due to the above-described reason. Therefore, in the case of the chemical plant or the microbial plant of the related art, a direct comparison result of the post-improvement KPI during a predetermined time period before performing the improvement measures and the post-improvement KPI during the same time period after performing the improvement measures is regarded as the improvement effect. However, as described above, in the plant, there occurs no situation where the operating conditions before performing the improvement measures and after performing the improvement measures completely coincide with each other, and it is not possible to reproduce the same operating conditions. Therefore, in most cases, the operating conditions have already changed at a point of time at which the post-improvement KPIs are compared with each other. For this reason, it cannot be said that the comparison of the post-improvement KPIs is proper comparison for estimating (checking) the improvement effect.

The present disclosure has been made in view of the above situations, and an object thereof is to provide an operational improvement effect calculation device, an operational improvement effect calculation method, an operational improvement effect calculation program, and a recording medium capable of checking an effect of improvement measures performed in a plant.

SUMMARY OF INVENTION

An operational improvement effect calculation device related to one aspect includes:
a similar data retrieval unit configured to retrieve, from inputted plant operation data relating to operations of a plant, comparison target plant operation data which includes more than one plant operation data points similar to a plant operation indicated by evaluation target plant operation data which is plant operation data of an evaluation target, and to calculate a first post-improvement evaluation indicator based on the evaluation target plant operation data and a first pre-improvement evaluation indicator based on each data point of the comparison target plant operation data; a confidence interval calculation unit configured to calculate a first confidence interval, based on the comparison target plant operation data; a baseline calculation unit configured to calculate a first baseline, which is a reference when comparing the first post-improvement evaluation indicator and the first pre-improvement evaluation indicator and corresponds to the first pre-improvement evaluation indicator, based on the first confidence interval; and an evaluation calculation unit configured to calculate a first evaluation result on the plant, based on the first post-improvement evaluation indicator and the first baseline.

An operational improvement effect calculation method related to one aspect includes: retrieving, from inputted plant operation data relating to operations of a plant, comparison target plant operation data which includes more than one plant operation data points similar to a plant operation indicated by evaluation target plant operation data which is plant operation data of an evaluation target; calculating a first post-improvement evaluation indicator based on the evaluation target plant operation data and a first pre-improvement evaluation indicator based on each data point of the comparison target plant operation data; calculating a first confidence interval, based on the comparison target plant operation data; calculating a baseline, which is a reference when comparing the first post-improvement evaluation indicator and the first pre-improvement evaluation indicator and corresponds to the first pre-improvement evaluation indicator, based on the first confidence interval; and calculating a first evaluation result on the plant, based on the first post-improvement evaluation indicator and the baseline.

An operational improvement effect calculation program related to one aspect causes a computer to execute a process that includes: retrieving, from inputted plant operation data relating to operations of a plant, comparison target plant operation data which includes more than one plant operation data points similar to a plant operation indicated by evaluation target plant operation data which is plant operation data of an evaluation target; calculating a first post-improvement evaluation indicator based on the evaluation target plant operation data and a first pre-improvement evaluation indicator based on each data point of the comparison target plant operation data; calculating a first confidence interval, based on the comparison target plant operation data; calculating a baseline, which is a reference when comparing the first post-improvement evaluation indicator and the first pre-improvement evaluation indicator and corresponds to the first pre-improvement evaluation indicator, based on the first confidence interval; and calculating a first evaluation result on the plant, based on the first post-improvement evaluation indicator and the baseline.

A non-transitory computer-readable recording medium that relates to one aspect and stores therein a program for causing a computer to execute a process that includes: retrieving, from inputted plant operation data relating to operations of a plant, comparison target plant operation data which includes more than one plant operation data points similar to a plant operation indicated by evaluation target plant operation data which is plant operation data of an evaluation target; calculating a first post-improvement evaluation indicator based on the evaluation target plant operation data and a first pre-improvement evaluation indicator based on each data point of the comparison target plant operation data; calculating a first confidence interval, based on the comparison target plant operation data; calculating a baseline, which is a reference when comparing the first post-improvement evaluation indicator and the first pre-improvement evaluation indicator and corresponds to the first pre-improvement evaluation indicator, based on the first confidence interval; and calculating a first evaluation result on the plant, based on the first post-improvement evaluation indicator and the baseline.

It becomes possible to provide the operational improvement effect calculation device, the operational improvement effect calculation method, the operational improvement effect calculation program and the recording medium capable of checking an effect of improvement measures performed in a plant.

BRIEF DESCRIPTION OF DRAWINGS

Exemplary embodiment(s) of the present invention will be described in detail based on the following figures, wherein:

FIG. 1 is a block diagram depicting a schematic configuration of an operational improvement effect calculation device in accordance with a first illustrative embodiment of the present disclosure;
FIG. 2 is a flowchart depicting an example of a processing sequence that is to be performed in the operational improvement effect calculation device in accordance with the first illustrative embodiment of the present disclosure;
FIG. 3 depicts an example of a result display on the operational improvement effect calculation device in accordance with the first illustrative embodiment of the present disclosure;
FIG. 4 is a block diagram depicting a schematic configuration of an operational improvement effect calculation device in accordance with a second illustrative embodiment of the present disclosure;
FIG. 5 is a flowchart depicting an example of a processing sequence that is to be performed in the operational improvement effect calculation device in accordance with the second illustrative embodiment of the present disclosure; and
FIG. 6 depicts an example of a configuration of a plant in which the operational improvement effect calculation device of an illustrative embodiment of the present disclosure is used.

DESCRIPTION OF EMBODIMENTS

<First Illustrative Embodiment

Hereinafter, illustrative embodiments of the present disclosure will be described with reference to the drawings. An operational improvement effect calculation device in accordance with a first illustrative embodiment of the present disclosure is a device for estimating (checking) an improvement effect obtained as a result of improvement measures by measuring in operating conditions after performing the improvement measures in a plant what level a key performance indicator (KPI) was when a plant characteristic remains as it is before performing the improvement measures.

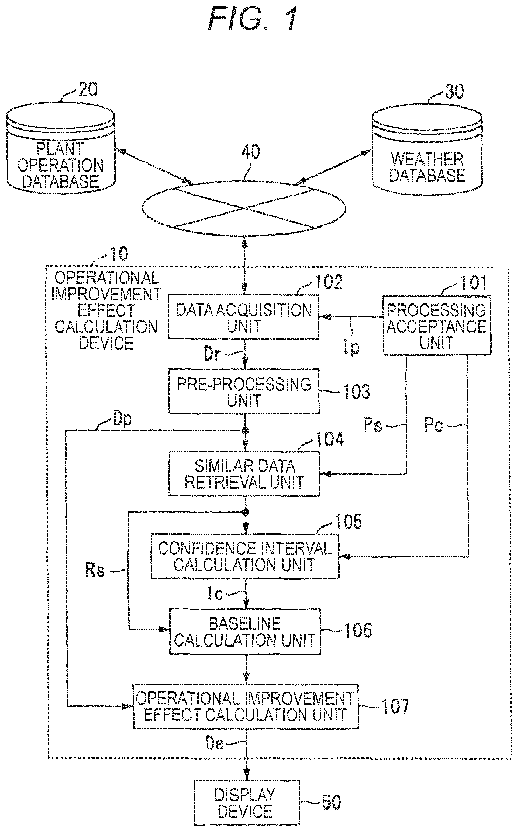

FIG. 1 is a block diagram depicting a schematic configuration of an operational improvement effect calculation device in accordance with a first illustrative embodiment of the present disclosure. An operational improvement effect calculation device 10 includes a processing receiving unit 101, a data acquisition unit 102, a pre-processing unit 103, a similar data retrieval unit 104, a confidence interval calculation unit 105, a baseline calculation unit 106, and an operational improvement effect calculation unit 107. Meanwhile, in FIG. 1, a plant operation database 20 and a weather database 30, in which data to be used by the operational improvement effect calculation device 10 so as to calculate an effect of improvement measures are stored, and a display device 50 configured to present data of the effect (hereinafter, referred to as "operational improvement effect") of the improvement measures calculated by the operational improvement effect calculation device 10 are also shown.

The plant operation database 20 is a database in which a variety of data from the past to the present relating to a plant operation is stored. In the plant operation database 20, data of raw materials such as types and used amounts of raw materials to be used when manufacturing a product in a plant, data of operating conditions (for example, flow rate, pressure, temperature and the like) detected by sensors provided to a facility, and data of plant operations (hereinafter, referred to as "plant operation data") in which a production volume and a quality of a manufactured product are associated with each other are stored. The plant operation data may include control data for controlling the facility when manufacturing a product, too. The present disclosure does not particularly limit the types of the plant operation data stored in the plant operation database 20.

The weather database 30 is a database in which data of weather (hereinafter, referred to as "weather data"), which is considered as external factors influencing the plant operation, is stored. In the weather database 30, the weather data in which data of weather such as "temperature", "atmospheric pressure", "humidity", "atmospheric conditions" and the like and data of time such as "date", "time" and the like are associated with each other is stored. The present disclosure does not particularly limit the types of the weather data stored in the weather database 30.

The network 40 is a network via which the operational improvement effect calculation device 10 is to acquire the data of plant operations stored in the plant operation database 20 and the weather data stored in the weather database 30. Here, the network 40 may be a general network or a dedicated network established in the plant. Also, the network 40 may be diverse networks, including wired and wireless networks. For example, when the network 40 is a general network, it may be the Internet, WiFi (registered trademark), a network in a cloud computing system, and the like. Also, for example, when the network 40 is a dedicated network established in the plant, it may be a network of industrial wireless standard such as ISA 100. 11a, wireless standard such as sensor network system, communication standard such as Wireless/Wired HART (registered trademark) in which wireless communication and wired communication are mixed, communication standard of master/slave type such as MODBUS (registered trademark), and the like.

The display device 50 is configured to present (display) data of the operational improvement effect calculated by the operational improvement effect calculation device 10 to a user who uses the operational improvement effect calculation device 10. The display device 50 includes a display device such as a liquid crystal monitor (Liquid Crystal Display: LCD) and the like, for example. In FIG. 1, the display device 50 is connected to an outside of the operational improvement effect calculation device 10. However, the display device 50 may be a constitutional element provided in the operational improvement effect calculation device 10.

The operational improvement effect calculation device 10 is configured to acquire diverse data, which is to be used when calculating the operational improvement effect, from the plant operation database 20 and the weather database 30 through the network 40, and to display the calculated data of the operational improvement effect on the display device 50.

The processing receiving unit 101 is a user interface that is to be operated by a user who uses the operational improvement effect calculation device 10 and that is configured to receive a variety of conditions, which are to be used when the operational improvement effect calculation device 10 calculates the operational improvement effect. The user operates the processing receiving unit 101 to designate diverse conditions such as a time period for which the operational improvement effect calculation device 10 is to calculate the operational improvement effect and parameters that are to be used when calculating the operational improvement effect. For example, the user designates a time period for which the improvement effect obtained as a result of the improvement measures is to be estimated (evaluated), and a time period of target for which the plant operation data and the weather data are to be retrieved when estimating (evaluating) the improvement effect. Meanwhile, in the below, the time period for which the improvement effect is to be estimated (evaluated) is referred to as "evaluation time period" and the time period of target for which the plant operation data and the weather data are to be retrieved is referred to as "retrieval target time period". Also, the user designates a condition (hereinafter, referred to as "retrieval parameter") for retrieving data that is to be used when calculating the operational improvement effect for the evaluation time period. Also, the user designates a condition (hereinafter, referred to as "confidence interval parameter") of a confidence interval of the operational improvement effect.

The processing receiving unit 101 is configured to receive the diverse conditions designated from the user, which are to be used when calculating the operational improvement effect, and to output the information of the received diverse conditions to the data acquisition unit 102, the similar data retrieval unit 104 and the confidence interval calculation unit 105.

When the display device 50 is a constitutional element provided in the operational improvement effect calculation device 10, the processing receiving unit 101 and the display device 50 may be combined. As the combined configuration of the processing receiving unit 101 and the display device 50, a touch panel may be possible, for example.

The data acquisition unit 102 is a network interface for acquiring the diverse data, which are to be used when calculating the operational improvement effect, from the plant operation database 20 and the weather database 30 via the network 40. The data acquisition unit 102 is configured to acquire the plant operation data and the weather data, which are included within the time period designated by the user, from the plant operation database 20 and the weather database 30, based on information (hereinafter, referred to as "time period information Ip") of the evaluation time period and retrieval target time period output from the processing receiving unit 101. The time period information Ip includes information (so-called time stamp) indicative of a time period, statuses of operation, stop and the like in a specific facility, information of a specific product such as a trademark, and the like.

The data acquisition unit 102 may be configured to acquire in real time the plant operation data and the weather data, which are to be used when calculating the operational improvement effect, from the plant operation database 20 and the weather database 30. In this case, the operational improvement effect calculation device 10 can calculate in real time not only the operational improvement effect at each evaluation time period such as one hour and one day but also the operational improvement effect at present time.

The data acquisition unit 102 is configured to output, to the pre-processing unit 103, the plant operation data and weather data, i.e., raw data of the evaluation time period and the retrieval target time period acquired from the plant operation database 20 and the weather database 30 via the network 40. In the below, when the plant operation data and the weather data are not distinguished, they are referred to as "original data Dr".

The pre-processing unit 103 is a processing unit configured to perform, for the original data Dr output from the data acquisition unit 102, processing of removing an abnormal value (for example, a value of data considered as a noise detected by the sensor provided to the facility), processing of normalizing variables (each dataset included in the original data Dr), processing of dividing time into specific time (for example, one hour, one day, and the like), so-called settlement processing, and the like.

Here, a variety of methods are conceivable as a method of each processing that is to be performed by the pre-processing unit 103. For example, as the method of processing in which the pre-processing unit 103 removes the abnormal value included in the original data Dr, a method of extracting only data, which can be handled as a normal value, by using a Mahalanobis distance is conceivable. In this case, the Mahalanobis distance $D_M(x)$ for data x in which an average is $\mu$ and a covariance matrix is $\Sigma$ can be obtained by a following equation (1).

[equation 1]

$$D_M(x) = \sqrt{(x-\mu)^T \sum{}^{-1}(x-\mu)} \quad \cdots (1)$$

Also, as the method of processing in which the pre-processing unit 103 normalizes the variables, a method of performing the normalization so that an average of respective variable (data) values included in the original data Dr is 0 and a variance is 1 is conceivable.

In the following explanation, each processing that is to be performed for the original data Dr by the pre-processing unit 103 is referred to as "pre-processing" without distinction. The operational improvement effect calculation device 10 is configured to perform processing of calculating the operational improvement effect, based on the original data Dr (hereinafter, referred to as "pre-processed data Dp") after the pre-processing unit 103 performs the pre-processing. The pre-processing unit 103 is configured to output the pre-processed data Dp to the similar data retrieval unit 104 and the operational improvement effect calculation unit 107.

The similar data retrieval unit 104 is a processing unit configured to retrieve similar data points from each data point included in the pre-processed data Dp output from the pre-processing unit 103. The similar data retrieval unit 104 is configured to retrieve the pre-processed data Dp before performing the improvement measures (i.e., the pre-processed data Dp of comparison target), which has a high degree of similarity to the pre-processed data Dp after performing the improvement measures (i.e., the pre-processed data Dp of evaluation target), based on a retrieval parameter (hereinafter, referred to as "retrieval parameter Ps") output from the processing receiving unit 101. More specifically, the similar data retrieval unit 104 is configured to retrieve the plant operation data before performing the improvement measures (hereinafter, referred to as pre-improvement data). The retrieved pre-improvement data satisfies a condition that at least the operating condition and the production volume included in the plant operation data after performing the improvement measures (hereinafter, referred to as post-improvement data) are similar. The retrieval parameter Ps output from the processing receiving unit 101 includes the number designated by the user by which the similar pre-processed data Dp (pre-processed data Dp of comparison target) is to be retrieved from the upper, and a threshold for determining whether the data is sufficiently similar (has a high degree of similarity). The similar data retrieval unit 104 is configured to retrieve as many similar pre-improvement data as the number designated by the retrieval parameter Ps in the order of similarity.

Here, a variety of methods are conceivable as the method by which the similar data retrieval unit 104 is to retrieve the similar data included in the plant operation data. For example, in a method, a distance between the post-improvement data at any time of the evaluation target (hereinafter, referred to as "evaluation target time") and the pre-improvement data at each time included in the pre-processed data Dp is calculated. And then, the plant operation data having the shortest calculated distance before performing the improvement measures is set as the pre-improvement data, which has the highest degree of similarity to the post-improvement data at the evaluation target time. The similar data retrieval unit 104 is configured to retrieve more than once the plant operation data having the close distance of the number included in the retrieval parameter Ps before performing the improvement measures, as the plant operation data having the high degree of similarity, in order from the plant operation data having the shortest calculated distance (highest degree of similarity) before performing the improvement measures. That is, the similar data retrieval unit 104 is configured to retrieve more than once the pre-improvement data, which has different data of the operating conditions and production volume but is similar to the post-improvement data at one evaluation target time. Here, as the method by which the similar data retrieval unit 104 calculates the distance between the plant operation data, a method of calculating the Euclidean distance may be exemplified. In this case, a Euclid distance between data x and data y can be obtained using a following equation (2).

[equation 2]

$$d(x, y) = \sqrt{\sum_{i=1}^{n} (y_i - x_i)^2} \quad \cdots (2)$$

Also, as the method by which the similar data retrieval unit 104 calculates the distance between the plant operation data, a correlation coefficient may be used. In this case, a correlation coefficient between data x and data y can be obtained using a following equation (3).

[equation 3]

$$r = \frac{\sum_{i=1}^{n} (x_i - \bar{x})(y_i - \bar{y})}{\sqrt{\sum_{i=1}^{n} (x_i - \bar{x})^2} \sqrt{\sum_{i=1}^{n} (y_i - \bar{y})^2}} \quad \cdots (3)$$

As the variables (data) that are to be used when determining whether the pre-processed data Dp is similar to each other, the similar data retrieval unit 104 may include the weather data (for example, "temperature", "time" and the like) in the determination target data, in addition to the data of the operating conditions and production volume included in the plant operation data. In this case, the similar data retrieval unit 104 may retrieve a plurality of the similar pre-improvement data, considering a season and a time of day, for example.

Also, the evaluation target time at which the similar data retrieval unit 104 determines whether the pre-processed data Dp is similar to each other is not limited to the above case where any time is set as the evaluation target time, i.e., instantaneous time is set as the evaluation target time, and a time period having a predetermined time width may be set as the evaluation target time. For example, an average value of one day, an integrated value, an operating condition pattern (trend) and the like may be used. Here, the operating condition pattern means that the similar data retrieval unit 104 retrieves the pre-processed data Dp having the high degree of similarity before performing the improvement measures by determining whether patterns of changes of the pre-processed data Dp of time-series included in the predetermined time width are similar to each other. In this case, the user designates a time period (hereinafter, referred to as "evaluation target time period") having a predetermined time width, which is set as the evaluation target time, by operating the processing receiving unit 101. When the evaluation target time period is included in the retrieval parameter Ps output from the processing receiving unit 101, the similar data retrieval unit 104 determines that the pre-processed data Dp after performing the improvement measures at the evaluation target time and the pre-processed data Dp before performing the improvement measures are similar to each other if patterns of changes of the pre-processed data Dp of time-series included in the time width of the evaluation target time period are similar to each other.

The similar data retrieval unit 104 is configured to calculate a post-improvement KPI, based on the pre-processed data Dp after performing the improvement measures at the evaluation target time (pre-processed data Dp of evaluation target). Also, the similar data retrieval unit 104 is configured to calculate a pre-improvement KPI, based on the pre-processed data Dp before performing the improvement measures (pre-processed data Dp of comparison target) retrieved with respect to the pre-processed data Dp after performing the improvement measures at the evaluation target time, i.e., the calculated post-improvement KPI. At this time, the similar data retrieval unit 104 is configured to calculate an average KPI by averaging the respective KPIs of the plurality of detected pre-processed data Dp before performing the improvement measures, and to set the calculated average KPI as the pre-improvement KPI. The similar data retrieval unit 104 is configured to calculate the post-improvement KPI at each evaluation target time included in the evaluation time period and the pre-improvement KPI corresponding to each post-improvement KPI.

The similar data retrieval unit 104 is configured to output, to the confidence interval calculation unit 105 and the baseline calculation unit 106, the calculated pre-improvement KPI and the plurality of pre-processed data Dp used for calculation of the pre-improvement KPI, i.e., the plurality of retrieved pre-processed data Dp before performing the improvement measures, which are similar to the pre-processing data Dp after performing the improvement measures for which the post-improvement KPI has been calculated, as data of a retrieval result (hereinafter, referred to as "retrieval result Rs").

The confidence interval calculation unit 105 is a processing unit configured to obtain a confidence interval of the pre-improvement KPI, based on the retrieval result Rs output from the similar data retrieval unit 104. The confidence interval calculation unit 105 is configured to obtain a confidence interval of the pre-improvement KPI by calculating how much an error exists in the pre-improvement KPI included in the retrieval result Rs output from the similar data retrieval unit 104, based on a confidence level (hereinafter, referred to as "confidence interval parameter Pc") output from the processing receiving unit 101. More specifically, the confidence interval calculation unit 105 is configured to obtain the confidence interval from the number of data and the confidence interval parameter, based on each of the plurality of pre-processed data Dp before performing the improvement measures included in the retrieval result Rs. Here, a confidence interval of data x of the KPI at any similar time can be obtained using a following equation (4).

[equation 4]

$$\text{CONFIDENCE INTERVAL} = \bar{x} \pm t \times \frac{S}{\sqrt{n}} \quad \cdots (4)$$

In the equation (4), t indicates a constant determined by a degree of freedom (the number of data-1) and a confidence level (confidence interval parameter), an equation (5) indicates an average value of data, S indicates a square root of an unbiased variance of data, and n indicates the number of data.

[equation 5]

$$\bar{x} \quad \cdots (5)$$

The confidence interval calculation unit 105 is configured to set a difference between an upper limit value of the confidence interval and the pre-improvement KPI, as an upper limit width of the confidence interval, and a difference between a lower limit value of the confidence interval and the pre-improvement KPI, as a lower limit width of the confidence interval. The confidence interval calculation unit 105 is configured to output information of the upper limit width of the confidence interval and information of the lower limit width of the confidence interval to the baseline calculation unit 106, as information of the confidence interval (hereinafter, referred to as "confidence interval information Ic").

The baseline calculation unit 106 is a processing unit configured to calculate a baseline, which is a reference for calculating and comparing the operational improvement effect, based on the retrieval result Rs output from the similar data retrieval unit 104 and the confidence interval information Ic output from the confidence interval calculation unit 105. The baseline calculation unit 106 is configured to calculate the baseline by applying each width of the upper limit width of the confidence interval and the lower limit width of the confidence interval, which are included in the confidence interval information Ic output from the confidence interval calculation unit 105, to the pre-improvement KPI included in the retrieval result Rs output from the similar data retrieval unit 104. More specifically, when the post-improvement KPI included in the retrieval result Rs output from the similar data retrieval unit 104 is an indicator such as a quality indicating that the larger the KPI is, the higher the improvement effect is, the baseline calculation unit 106 calculates "pre-improvement KPI + upper limit width of confidence interval", as the baseline. On the other hand, when the post-improvement KPI included in the retrieval result Rs output from the similar data retrieval unit 104 is an indicator such as consumption energy indicating that the smaller the KPI is, the higher the improvement effect is, the baseline calculation unit 106 calculates "pre-improvement KPI -lower limit width of confidence interval", as the baseline. Thereby, the operational improvement effect calculation device 10 can check the minimum improvement effect obtained as a result of the improvement measures by comparing the baseline calculated by the baseline calculation unit 106 and the post-improvement KPI calculated by the similar data retrieval unit 104.

The baseline calculation unit 106 is configured to output each of the retrieval result Rs output from the similar data retrieval unit 104 and the calculated baseline data to the operational improvement effect calculation unit 107.

The operational improvement effect calculation unit 107 is a processing unit configured to calculate the operational improvement effect obtained as a result of the improvement measures, based on at least the retrieval result Rs and the baseline data output from the baseline calculation unit 106. More specifically, the operational improvement effect calculation unit 107 is configured to calculate a difference between the post-improvement KPI and the baseline data (value), as the operational improvement effect. That is, the operational improvement effect calculation unit 107 is configured to calculate "post-improvement KPI - baseline", as the operational improvement effect. At this time, the operational improvement effect calculation unit 107 is configured to calculate the operational improvement effect at each evaluation target time by using the corresponding post-improvement KPI and baseline data (value). Also, at this time, the operational improvement effect calculation device 10 may be configured to perform the data calculation by using the pre-processed data Dp output from the pre-processing unit 103, so as to indicate the calculated operational improvement effect in detail.

The operational improvement effect calculation unit 107 is configured to output data (hereinafter, referred to as "operational improvement effect data De") of each calculated operational improvement effect at the evaluation target time, as a result of the operational improvement effect evaluated during the evaluation time period by the operational improvement effect calculation device 10.

The operational improvement effect calculation device 10 is configured to output and display the operational improvement effect data De on the display device 50. To this end, the operational improvement effect calculation unit 107 may be configured to generate image data, which is to explicitly express the improvement effect, the post-improvement KPI, the pre-improvement KPI, the baseline and the like indicated at each evaluation target time by the operational improvement effect data De, and to output and display the generated image data on the display device 50, as a result the evaluated operational improvement effect.

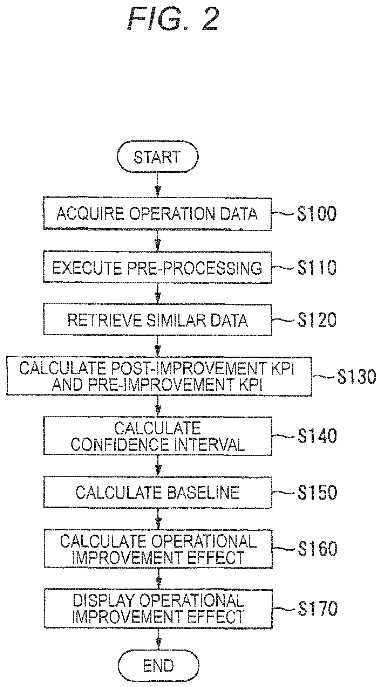

Subsequently, the operations of the operational improvement effect calculation device 10 are described. FIG. 2 is a flowchart depicting an example of a processing sequence that is to be performed in the operational improvement effect calculation device 10 in accordance with the first illustrative embodiment of the present disclosure.

In the flowchart of FIG. 2 depicting the operations of the operational improvement effect calculation device 10, the operational improvement effect calculation device 10 has the display device 50 embedded therein, and displays, on the display device 50, the image data, which is to explicitly express the calculated operational improvement effect data De, for the user who uses the operational improvement effect calculation device 10. Also, in the below, it is assumed that the time period, the retrieval parameter and the confidence interval parameter have been already designated by the user who uses the operational improvement effect calculation device 10.

When the operational improvement effect calculation device 10 is instructed to implement the evaluation of the operational improvement effect by the user, the operational improvement effect calculation device 10 starts the evaluation of the operational improvement effect corresponding to the designated time period, retrieval parameter and confidence interval parameter.

When the operational improvement effect calculation device 10 starts the evaluation of the operational improvement effect, the data acquisition unit 102 first acquires the plant operation data and weather data, which are included in the retrieval target time period and evaluation time period indicated by the time period information Ip output from the processing receiving unit 101, from the plant operation database 20 and the weather database 30 via the network 40 (step S100). Then, the data acquisition unit 102 outputs the original data Dr, in which the acquired plant operation data and weather data are included, to the pre-processing unit 103.

Continuously, the pre-processing unit 103 executes the pre-processing for the original data Dr output from the data acquisition unit 102 (step S110). More specifically, the pre-processing unit 103 executes processing of removing an abnormal value of the original data Dr by using the Mahalanobis distance, and executes normalization for the original data Dr so that an average of variable (data) values included in the original data Dr is 9 and a variance is 1, for example. Then, the pre-processing unit 103 outputs the pre-processed data Dp, in which each data point of original data Dr for which the pre-processing has been executed is included, to the similar data retrieval unit 104 and the operational improvement effect calculation unit 107.

Continuously, the similar data retrieval unit 104 retrieves the pre-processed data Dp before performing the improvement measures (pre-processed data Dp of comparison target), which is similar to the pre-processed data Dp after performing the improvement measures (pre-processed data Dp of evaluation target), at each evaluation target time included in the pre-processed data Dp output from the pre-processing unit 103, based on the retrieval parameter Ps output from the processing receiving unit 101 (step S120). Here, a case where the retrieval parameter Ps output from the processing receiving unit 101 includes n (n: natural number, positive integer), as the number of retrieving the similar pre-processed data Dp (pre-processed data Dp of comparison target), is possible. In this case, in the processing of step S120, the similar data retrieval unit 104 retrieves the n similar pre-processed data Dp before performing the improvement measures, which have the highest degree of similarity to the pre-processed data Dp after performing the improvement measures at each evaluation target time.

Thereafter, the similar data retrieval unit 104 calculates the post-improvement KPI (this is an example of the first post-improvement KPI) and the pre-improvement KPI (this is an example of the first pre-improvement KPI) (step S130). Here, in the processing of step S120, a case where the similar data retrieval unit 104 retrieves the n similar pre-processed data Dp before performing the improvement measures, which correspond to the pre-processed data Dp after performing the improvement measures at each evaluation target time, is possible. In this case, in the processing of step S130, the similar data retrieval unit 104 calculates the post-improvement KPI at the evaluation target time for each of the pre-processed data Dp after performing the improvement measures at each evaluation target time. Also, in the processing of step S130, the similar data retrieval unit 104 calculates, as each pre-improvement KPI corresponding to the post-improvement KPI at each evaluation target time, an average KPI obtained by averaging the KPIs of the n similar pre-processed data Dp before performing the improvement measures, which correspond to the pre-processed data Dp after performing the improvement measures at each of the evaluation target times. Then, the similar data retrieval unit 104 outputs the calculated post-improvement KPI at each evaluation target time, each pre-improvement KPI corresponding to the post-improvement KPI at each evaluation target time, and the n similar pre-processed data Dp before performing the improvement measures for which the pre-improvement KPI has been respectively calculated, to the confidence interval calculation unit 105 and the baseline calculation unit 106, as the retrieval result Rs.

Continuously, the confidence interval calculation unit 105 calculates the confidence interval (this is an example of the first confidence interval) of the pre-improvement KPI included in the retrieval result Rs output from the similar data retrieval unit 104, based on the confidence interval parameter Pc output from the processing receiving unit 101 (step S140). Here, a case where the n similar pre-processed data Dp before performing the improvement measures for which the pre-improvement KPI has been respectively calculated are included in the retrieval result Rs output from the similar data retrieval unit 104 is possible. In this case, the confidence interval calculation unit 105 obtains the confidence interval from the number of data and the confidence interval parameter Pc by using the equation (4), based on each of the n similar pre-processed data Dp before performing the improvement measures, for each pre-improvement KPI. Then, the confidence interval calculation unit 105 outputs the confidence interval information Ic, which includes the information of the upper limit width (this is an example of the first upper limit width) of the obtained confidence interval and the information of the lower limit width (this is an example of the lower limit width) of the obtained confidence interval, to the baseline calculation unit 106.

Continuously, the baseline calculation unit 106 calculates a baseline (this is an example of the first baseline) corresponding to each pre-improvement KPI included in the retrieval result Rs output from the similar data retrieval unit 104, based on the confidence interval information Ic output from the confidence interval calculation unit 105 (step S150). Then, the baseline calculation unit 106 outputs at least the post-improvement KPI and pre-improvement KPI included in the retrieval result Rs output from the similar data retrieval unit 104 and the calculated baseline data to the operational improvement effect calculation unit 107.

Continuously, the operational improvement effect calculation unit 107 calculates the operational improvement effect at each evaluation target time (this is an example of the first evaluation result), based on the retrieval result Rs and the baseline data output from the baseline calculation unit 106 (step S160). Then, the operational improvement effect calculation unit 107 generates the image data for explicitly expressing the calculated operational improvement effect at each evaluation target time, and outputs the generated image data to the display device 50, as the operational improvement effect data De.

Continuously, the display device 50 displays an image of the operational improvement effect data De output from the operational improvement effect calculation unit 107 (step S170).

By the above configuration and processing sequence, the operational improvement effect calculation device 10 of the first illustrative embodiment evaluates the effect (operational improvement effect) of the improvement measures performed in the plant with the conditions designated by the user by using the plant operation data and weather data included in the retrieval target time period and evaluation time period designated by the user. At this time, the operational improvement effect calculation device 10 of the first illustrative embodiment retrieves more than once the pre-improvement data similar to the post-improvement data, calculates the pre-improvement KPI and the baseline, and calculates the minimum improvement effect (operational improvement effect) obtained as a result of the improvement measures, from the baseline and the post-improvement KPI. Thereby, the operational improvement effect calculation device 10 of the first illustrative embodiment can evaluate the improvement effect (operational improvement effect) even when the plant to which the operational improvement effect calculation device 10 is applied is a plant such as a chemical plant and a microbial plant that is difficult to be clearly indicated by a statistical model or a characteristic formula. Also, the operational improvement effect calculation device 10 of the first illustrative embodiment presents the user with the evaluated effect (operational improvement effect) of the improvement measures. Thereby, the user who uses the operational improvement effect calculation device 10 of the first illustrative embodiment can check the improvement effect obtained as a result of the improvement measures performed in the plant.

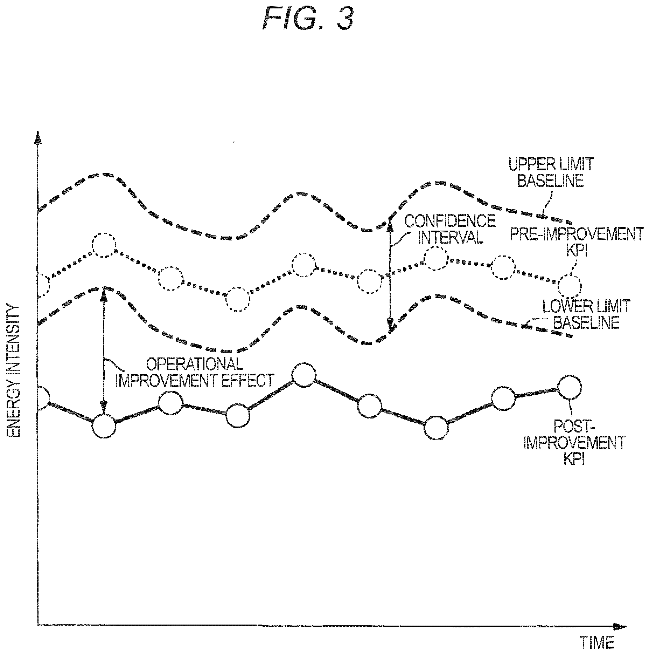

Here, an example where the result of the operational improvement effect evaluated by the operational improvement effect calculation device 10 is displayed on the display device 50 is described. FIG. 3 depicts an example of a display of the result (result of the operational improvement effect) on the operational improvement effect calculation device 10 in accordance with the first illustrative embodiment of the present disclosure. FIG. 3 depicts an example in which when the post-improvement KPI of the evaluation target is the energy efficiency, the operational improvement effect calculation device 10 displays, as the result of the operational improvement effect, temporal changes of the post-improvement KPI, the pre-improvement KPI and the baseline on the display device 50. In FIG. 3, the temporal changes of the post-improvement KPI, the pre-improvement KPI and the baseline are indicated by polygonal curves on a graph of which a vertical axis indicates a magnitude of the energy efficiency and a horizontal axis indicates time.

The energy efficiency is an indicator indicating that the smaller the value of the KPI is, the higher the improvement effect is. In the operational improvement effect calculation device 10, the baseline calculation unit 106 calculates "pre-improvement KPI - lower limit width of confidence interval", as the baseline. Therefore, in the graph of FIG. 3 that is displayed on the display device 50 as a result of the operational improvement effect, the baseline is the baseline (lower limit baseline) located below the pre-improvement KPI. Also, in FIG. 3, the difference between the lower limit baseline and the post-improvement KPI is the minimum operational improvement effect obtained as a result of the improvement measures performed in the plant.

The user who uses the operational improvement effect calculation device 10 can check the improvement effect obtained as a result of the improvement measures performed in the plant by checking the minimum operational improvement effect as shown in FIG. 3.

As described above, the energy efficiency is an indicator indicating that the smaller the value of the KPI is, the higher the improvement effect is. Therefore, the baseline that is displayed, as a result of the operational improvement effect, on the display device 50 by the operational improvement effect calculation device 10 is only the lower limit baseline. However, in FIG. 3, in order to explicitly indicate the confidence interval of the pre-improvement KPI calculated by the confidence interval calculation unit 105, "pre-improvement KPI + upper limit width of confidence interval", i.e., a baseline (upper limit baseline) located above the pre-improvement KPI is also displayed for reference. In FIG. 3, a width between the lower limit baseline and the upper limit baseline is the confidence interval calculated by the confidence interval calculation unit 105.

In FIG. 3, as an example of the result of the operational improvement effect that is to be displayed on the display device 50, the temporal changes of the post-improvement KPI, the pre-improvement KPI and the baseline are displayed by the line graphs. However, the type of the result of the operational improvement effect that is to be displayed on the display device 50 by the operational improvement effect calculation device 10 is not limited to the line graph as shown in FIG. 3. For example, the operational improvement effect calculation device 10 may be configured to indicate each time (evaluation target time) included in the result of the operational improvement effect and the data (value) of the operational improvement effect at the corresponding time by numerical values.

The operational improvement effect calculation device 10 is configured to calculate the pre-improvement KPI by retrieving more than once the pre-improvement data similar to the post-improvement data. However, in the plant operation data of the retrieval target time period acquired from the plant operation database 20 by the data acquisition unit 102, the pre-improvement data, which is sufficiently similar to (has the high degree of similarity to) the post-improvement data, may not be included or may be less included. In this case, in the pre-improvement data of the number designated by the user and retrieved by the similar data retrieval unit 104, the pre-improvement data, which is not sufficiently similar (has the low degree of similarity), is also included. Also, it may be possible that a configuration of preparing a statistical model and the like and evaluating the operational improvement effect is better than a configuration of evaluating the operational improvement effect with the plant operation data, which is not sufficiently similar (has the low degree of similarity), being included. Therefore, the configuration of the operational improvement effect calculation device may be changed to a configuration of switching the method of evaluating the operational improvement effect, based on the number of the pre-improvement data, which could be retrieved, the high degree of similarity to the post-improvement data, and the like.

<Second Illustrative Embodiment>

Subsequently, a second illustrative embodiment of the present disclosure is described. An operational improvement effect calculation device in accordance with the second illustrative embodiment of the present disclosure is also a device for estimating (checking) the improvement effect obtained as a result of the improvement measures by measuring in operating conditions after performing the improvement measures in a plant what level the KPI was when the KPI was a plant characteristic before performing the improvement measures, like the operational improvement effect calculation device 10 of the first illustrative embodiment. To this end, the constitutional elements of the operational improvement effect calculation device of the second illustrative embodiment include constitutional elements similar to the constitutional elements of the operational improvement effect calculation device 10 of the first illustrative embodiment shown in FIG. 1, too. Therefore, in the below, the constitutional elements, which are similar to the constitutional elements of the operational improvement effect calculation device 10 of the first illustrative embodiment, of the constitutional elements of the operational improvement effect calculation device of the second illustrative embodiment are denoted with the same reference numerals, and the detailed descriptions thereof are omitted.

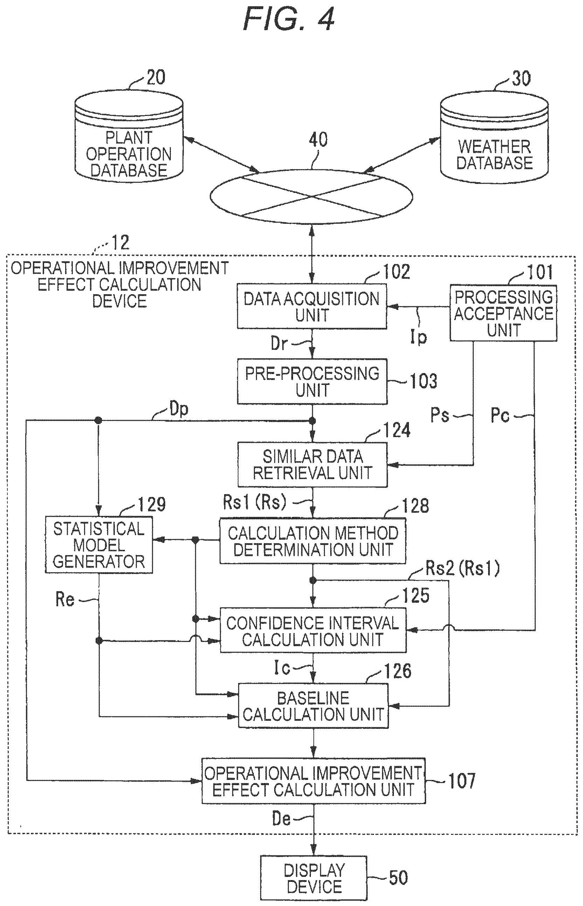

FIG. 4 is a block diagram depicting a schematic configuration of an operational improvement effect calculation device in accordance with the second illustrative embodiment of the present disclosure. An operational improvement effect calculation device 12 includes the processing receiving unit 101, the data acquisition unit 102, the pre-processing unit 103, a similar data retrieval unit 124, a calculation method determination unit 128, a statistical model preparation unit 129, a confidence interval calculation unit 125, a baseline calculation unit 126, and the operational improvement effect calculation unit 107.

Also in FIG. 4, like FIG. 1, the plant operation database 20 and weather database 30 connected to the network 40 and the display device 50 are also shown. The plant operation database 20, the weather database 30 and the network 40 shown in FIG. 4 are the same as the corresponding constitutional elements shown in FIG. 1. Also, the display device 50 shown in FIG. 4 is the same as the display device 50 shown in FIG. 1. Therefore, the display device 50 may be a constitutional element provided in the operational improvement effect calculation device 12, like the operational improvement effect calculation device 10 of the first illustrative embodiment. Also, the display device 50 is combined with the processing receiving unit 101, so that it may be configured as a touch panel, for example, like the operational improvement effect calculation device 10 of the first illustrative embodiment.

In the operational improvement effect calculation device 12, the calculation method determination unit 128 and the statistical model preparation unit 129 are added to the operational improvement effect calculation device 10 of the first illustrative embodiment shown in FIG. 1. Therefore, in the operational improvement effect calculation device 12, the similar data retrieval unit 104 provided to the operational improvement effect calculation device 10 of the first illustrative embodiment shown in FIG. 1 is replaced with the similar data retrieval unit 124, the confidence interval calculation unit 105 is replaced with the confidence interval calculation unit 125, and the baseline calculation unit 106 is replaced with the baseline calculation unit 126. By this configuration, in the operational improvement effect calculation device 12, the improvement effect obtained as a result of the improvement measures can be estimated (evaluated) by using a statistical model, too.

The pre-processing unit 103 is configured to output, to the similar data retrieval unit 124, the statistical model preparation unit 129 and the operational improvement effect calculation unit 107, the pre-processed data Dp obtained by performing the pre-processing for the original data Dr output from the data acquisition unit 102.

The similar data retrieval unit 124 is configured to retrieve more than once the pre-processed data Dp before performing the improvement measures (pre-processed data Dp of comparison target), which has the high degree of similarity to the pre-processed data Dp after performing the improvement measures (pre-processed data Dp of evaluation target) included in the pre-processed data Dp output from the pre-processing unit 103, like the similar data retrieval unit 104 provided to the operational improvement effect calculation device 10 of the first illustrative embodiment. Also, the similar data retrieval unit 124 is configured to calculate the post-improvement KPI and the pre-improvement KPI, like the similar data retrieval unit 104 provided to the operational improvement effect calculation device 10 of the first illustrative embodiment.

The similar data retrieval unit 124 is configured to output the retrieval result Rs including the calculated post-improvement KPI and pre-improvement KPI and the plurality of retrieved pre-processed data Dp before performing the improvement measures to the calculation method determination unit 128, like the similar data retrieval unit 104 provided to the operational improvement effect calculation device 10 of the first illustrative embodiment. However, in the operational improvement effect calculation device 12, the calculation method determination unit 128 to be described later is configured to determine a baseline calculation method, based on the degree of similarity of each pre-processed data Dp before performing the improvement measures to the pre-processed data Dp after performing the improvement measures. To this end, the similar data retrieval unit 124 is configured to add information, which indicates the degree of similarity to the pre-processed data Dp after performing the improvement measures, to the plurality of retrieved pre-processed data Dp before performing the improvement measures, and then to output the retrieval result Rs having the same included therein. When the similar data retrieval unit 124 retrieves the pre-processed data Dp before performing the improvement measures by calculating the distance to the pre-processed data Dp after performing the improvement measures, the information indicative of the degree of similarity is information of the distance calculated upon the retrieval. Therefore, in FIG. 4, in order to distinguish the retrieval result Rs, which is to be output by the similar data retrieval unit 104 provided to the operational improvement effect calculation device 10 of the first illustrative embodiment, and the retrieval result Rs that is to be output by the similar data retrieval unit 124, the retrieval result Rs that is to be output by the similar data retrieval unit 124 is denoted as "retrieval result Rs1 ".

The calculation method determination unit 128 is a processing unit configured to determine a method of calculating the baseline for calculating the operational improvement effect, based on the retrieval result Rs1 output from the similar data retrieval unit 124. The calculation method determination unit 128 is configured to switch whether to calculate the baseline for the pre-improvement KPI calculated by the similar data retrieval unit 124 or to calculate the baseline for the pre-improvement KPI calculated by the statistical model preparation unit 129, based on the pre-processed data Dp before performing the improvement measures included in the retrieval result Rs1. More specifically, the calculation method determination unit 128 is configured to determine whether the pre-processed data Dp before performing the improvement measures, which is sufficiently similar to the pre-processed data Dp after performing the improvement measures, is sufficiently included in the retrieval result Rs1, based on the information indicative of the degree of similarity added to each pre-processed data Dp before performing the improvement measures included in the retrieval result Rs1. In other words, the calculation method determination unit 128 is configured to determine whether the sufficient number of the pre-processed data Dp before performing the improvement measures, which is sufficiently similar to the pre-processed data Dp after performing the improvement measures, has been retrieved by the similar data retrieval unit 124.

Here, a variety of methods are conceivable as the method by which the calculation method determination unit 128 determines whether the similar pre-processed data Dp before performing the improvement measures is sufficiently included in the retrieval result Rs1. For example, a method is conceivable in which the calculation method determination unit 128 performs the determination by comparing the largest distance of the distances added to each pre-processed data Dp before performing the improvement measures included in the retrieval result Rs1 with a predetermined distance threshold. In this case, when the largest distance is smaller than the predetermined distance threshold, the calculation method determination unit 128 determines that the similar pre-processed data Dp before performing the improvement measures is sufficiently included in the retrieval result Rs1. When the largest distance is equal to or larger than the predetermined distance threshold, the calculation method determination unit 128 determines that the similar pre-processed data Dp before performing the improvement measures is not sufficiently included in the retrieval result Rs1. Also, for example, a method is conceivable in which the calculation method determination unit 128 performs the determination by counting the number of the pre-processed data Dp before performing the improvement measures included in the retrieval result Rs1 and having information added thereto, which indicates a distance smaller than the predetermined distance threshold. In this case, when the counted number of the pre-processed data Dp before performing the improvement measures is equal to or larger than a threshold of the predetermined number, the calculation method determination unit 128 determines that the similar pre-processed data Dp before performing the improvement measures is sufficiently included in the retrieval result Rs1. When the counted number is smaller than the threshold of the predetermined number, the calculation method determination unit 128 determines that the similar pre-processed data Dp before performing the improvement measures is not sufficiently included in the retrieval result Rs1. Also, for example, a method is conceivable in which the calculation method determination unit 128 performs the determination by averaging the distances added to each pre-processed data Dp before performing the improvement measures included in the retrieval result Rs1, i.e., calculating an average distance of the respective pre-processed data Dp before performing the improvement measures. In this case, when the calculated average distance is equal to or smaller than a predetermined average distance threshold, the calculation method determination unit 128 determines that the similar pre-processed data Dp before performing the improvement measures is sufficiently included in the retrieval result Rs1. When the calculated average distance is larger than the predetermined average distance threshold, the calculation method determination unit 128 determines that the similar pre-processed data Dp before performing the improvement measures is not sufficiently included in the retrieval result Rs1.

When it is determined that the pre-processed data Dp before performing the improvement measures, which is sufficiently similar to the pre-processed data Dp after performing the improvement measures, is sufficiently included in the retrieval result Rs1, the calculation method determination unit 128 determines that the baseline is to be calculated for the pre-improvement KPI calculated by the similar data retrieval unit 124. On the other hand, when it is determined that the pre-processed data Dp before performing the improvement measures, which is sufficiently similar to the pre-processed data Dp after performing the improvement measures, is not sufficiently included in the retrieval result Rs1, the calculation method determination unit 128 determines that the baseline is to be calculated for the pre-improvement KPI calculated by the statistical model preparation unit 129. The calculation method determination unit 128 is configured to output a determination result of the baseline calculation method to the statistical model preparation unit 129, the confidence interval calculation unit 125 and the baseline calculation unit 126.

Also, the calculation method determination unit 128 is configured to output the retrieval result Rs1 output from the similar data retrieval unit 124 to the confidence interval calculation unit 125 and the baseline calculation unit 126, as it is. However, as described above, the calculation method determination unit 128 is configured to determine whether the similar pre-processed data Dp before performing the improvement measures is sufficiently included in the retrieval result Rs1. Therefore, when the calculation method determination unit 128 determines that the similar pre-processed data Dp before performing the improvement measures is sufficiently included in the retrieval result Rs1, the pre-processed data Dp before performing the improvement measures, which has not been determined as being sufficiently similar to the pre-processed data Dp after performing the improvement measures, may also be included. For this reason, the calculation method determination unit 128 may be configured to add information for determining the pre-processed data Dp before performing the improvement measures, which has not been determined as being sufficiently similar to the pre-processed data Dp after performing the improvement measures. In other words, the calculation method determination unit 128 may be configured to add the information for determining the pre-processed data Dp before performing the improvement measures (i.e., the pre-processed data Dp of effective comparison target), which is to be used in the processing to be performed by the confidence interval calculation unit 125 and the baseline calculation unit 126, and then to output the retrieval result Rs1 having the same included therein. Also, the calculation method determination unit 128 may be configured to delete the pre-processed data Dp before performing the improvement measures, which has not been determined as being sufficiently similar to the pre-processed data Dp after performing the improvement measures, from the retrieval result Rs1 so that the corresponding data is not to be output to the confidence interval calculation unit 125 and the baseline calculation unit 126, for example. In other words, the calculation method determination unit 128 may be configured to output the retrieval result Rs1 in which only the pre-processed data Dp before performing the improvement measures (i.e., the pre-processed data Dp of effective comparison target), which is to be used in the processing to be performed by the confidence interval calculation unit 125 and the baseline calculation unit 126, is included. Also, when the calculation method determination unit 128 has performed the processing (addition or deletion of the information) for determining the pre-processed data Dp before performing the improvement measures, which has not been determined as being sufficiently similar to the pre-processed data Dp after performing the improvement measures, the calculation method determination unit 128 may again calculate the pre-improvement KPI, based on the pre-processed data Dp before performing the improvement measures, which has been determined as being sufficiently similar to the pre-processed data Dp after performing the improvement measures, and to output the retrieval result Rs1 having the same included therein. That is, the calculation method determination unit 128 may be configured to calculate the pre-improvement KPI, based on only the pre-processed data Dp before performing the improvement measures (i.e., the pre-processed data Dp of effective comparison target), which is to be used in the processing to be performed by the confidence interval calculation unit 125 and the baseline calculation unit 126, and to change the pre-improvement KPI to be included in the retrieval result Rs with the pre-improvement KPI calculated by the calculation method determination unit 128. Therefore, in FIG. 4, in order to distinguish the retrieval result Rs1 to be input to the calculation method determination unit 128, i.e., the retrieval result Rs1 output from the similar data retrieval unit 124 and the retrieval result Rs1 to be output from the calculation method determination unit 128, the retrieval result Rs1 that is to be output by the calculation method determination unit 128 is denoted as "retrieval result Rs2".

The statistical model preparation unit 129 is a processing unit configured to prepare a statistical model on the basis of the pre-processed data Dp output from the pre-processing unit 103 and to estimate the KPI on the basis of the prepared statistical model. The statistical model preparation unit 129 is configured to prepare a statistical model, based on the pre-processed data Dp before performing the improvement measures of the retrieval target time period included in the pre-processed data Dp and designated by the user. Here, as the statistical model to be prepared by the statistical model preparation unit 129, a variety of models are conceivable. For example, the statistical model preparation unit 129 is configured to prepare, as the statistical model, a regression model by using a partial least squares regression (PLS regression).

The statistical model preparation unit 129 is configured to calculate a post-improvement KPI, based on the pre-processed data Dp after performing the improvement measures (pre-processed data Dp of evaluation target) at the evaluation target time included in the pre-processed data Dp output from the pre-processing unit 103. The post-improvement KPI that is to be calculated by the statistical model preparation unit 129 is a KPI similar to the post-improvement KPI that is to be calculated by the similar data retrieval unit 124. Also, the statistical model preparation unit 129 is configured to calculate (estimate) a pre-improvement KPI corresponding to the pre-processed data Dp after performing the improvement measures at the evaluation target time, i.e., the calculated post-improvement KPI by using the prepared statistical model. The statistical model preparation unit 129 is configured to calculate (estimate) the post-improvement KPI at each evaluation target time included in the evaluation time period and the pre-improvement KPI corresponding to each post-improvement KPI.

The statistical model preparation unit 129 is configured to output, as data of an estimated result (hereinafter, referred to as "estimation result Re"), the pre-improvement KPI calculated (estimated) using the statistical model, the pre-processed data Dp before performing the improvement measures used for the preparation of the statistical model, the pre-processed data Dp of retrieval target time period used for the preparation of the statistical model and the pre-improvement KPI calculated (estimated) using the statistical model to the confidence interval calculation unit 125 and the baseline calculation unit 126.

The confidence interval calculation unit 125 is a processing unit configured to obtain a confidence interval of the pre-improvement KPI calculated by the similar data retrieval unit 124, based on the retrieval result Rs2 output from the calculation method determination unit 128, like the confidence interval calculation unit 105 provided to the operational improvement effect calculation device 10 of the first illustrative embodiment. Also, the confidence interval calculation unit 125 is a processing unit configured to obtain a confidence interval of the pre-improvement KPI calculated by the statistical model preparation unit 129, based on the estimation result Re output from the statistical model preparation unit 129. The confidence interval calculation unit 125 is configured to obtain any one confidence interval of the confidence interval of the pre-improvement KPI calculated by the similar data retrieval unit 124 and the confidence interval of the pre-improvement KPI calculated by the statistical model preparation unit 129, in correspondence to the determination result of the baseline calculation method output from the calculation method determination unit 128.

When obtaining the confidence interval of the pre-improvement KPI calculated by the similar data retrieval unit 124, the confidence interval calculation unit 125 obtains the confidence interval of the pre-improvement KPI by calculating how much an error exists in the pre-improvement KPI included in the retrieval result Rs2 output from the calculation method determination unit 128, based on the confidence interval parameter Pc output from the processing receiving unit 101, like the confidence interval calculation unit 105 provided to the operational improvement effect calculation device 10 of the first illustrative embodiment. In The method by which the confidence interval calculation unit 125 obtains the confidence interval of the pre-improvement KPI included in the retrieval result Rs2 output from the calculation method determination unit 128 is the same as the confidence interval calculation unit 105 provided to the operational improvement effect calculation device 10 of the first illustrative embodiment. Therefore, the detailed description of the method by which the confidence interval calculation unit 125 obtains the confidence interval of the pre-improvement KPI included in the retrieval result Rs2 output from the calculation method determination unit 128 is omitted.

On the other hand, when obtaining the confidence interval of the pre-improvement KPI calculated by the statistical model preparation unit 129, the confidence interval calculation unit 125 obtains the confidence interval by the equation (4), based on an estimated error amount when calculating (estimating) the pre-improvement KPI by using the statistical model prepared by the statistical model preparation unit 129. However, when the confidence interval calculation unit 125 obtains the confidence interval of the pre-improvement KPI calculated by the statistical model preparation unit 129, the data that is used for the calculation is different. More specifically, the confidence interval calculation unit 125 is configured to obtain the difference (estimated error amount) between the post-improvement KPI and the pre-improvement KPI at each retrieval target time, based on the pre-processed data Dp of retrieval target time period, which is used when preparing the statistical model included in the estimation result Re, and the pre-improvement KPI calculated (estimated) using the statistical model. That is, the confidence interval calculation unit 125 is configured to calculate "KPI for confidence interval calculation - pre-improvement KPI" at each retrieval target time. Then, the confidence interval calculation unit 125 is configured to obtain a confidence interval of the estimated error amount by substituting the obtained estimated error amount for the data x of the equation (4). Then, the confidence interval calculation unit 125 is configured to set an upper limit value of the obtained confidence interval as the upper limit width of the confidence interval, as it is, and to set a lower limit value of the obtained confidence interval as the lower limit width of the confidence interval, as it is.

The confidence interval calculation unit 125 is configured to output the information of the upper limit width of the confidence interval and the information of the lower limit width of the confidence interval corresponding to the determination result of the baseline calculation method output from the calculation method determination unit 128, to the baseline calculation unit 126, as the confidence interval information Ic.

The baseline calculation unit 126 is a processing unit configured to calculate a baseline, which is a reference for calculating and comparing the operational improvement effect, based on the retrieval result Rs2 output from the calculation method determination unit 128 and the confidence interval information Ic output from the confidence interval calculation unit 125, like the baseline calculation unit 106 provided to the operational improvement effect calculation device 10 of the first illustrative embodiment. Also, the baseline calculation unit 126 is a processing unit configured to calculate a baseline for calculating the operational improvement effect, based on the estimation result Re output from the statistical model preparation unit 129 and the confidence interval information Ic output from the confidence interval calculation unit 125. The baseline calculation unit 126 is configured to calculate a baseline corresponding to any one pre-improvement KPI of the pre-improvement KPI included in the retrieval result Rs2 output from the calculation method determination unit 128 and the pre-improvement KPI included in the estimation result Re output from the statistical model preparation unit 129, in correspondence to the determination result of the baseline calculation method output from the calculation method determination unit 128.

The method by which the baseline calculation unit 126 calculates the baseline corresponding to the pre-improvement KPI is the same as the baseline calculation unit 106 provided to the operational improvement effect calculation device 10 of the first illustrative embodiment, except that the pre-improvement KPI is different to which any width of the upper limit width of the confidence interval and the lower limit width of the confidence interval included in the confidence interval information Ic output from the confidence interval calculation unit 125 is applied in correspondence to the determination result of the baseline calculation method output from the calculation method determination unit 128. Therefore, the detailed description of the method by which the baseline calculation unit 126 calculates the baseline corresponding to the pre-improvement KPI is omitted.

The baseline calculation unit 126 is configured to output each of the retrieval result Rs2 output from the calculation method determination unit 128 or the estimation result Re output from the statistical model preparation unit 129 and the calculated baseline data to the operational improvement effect calculation unit 107, in correspondence to the determination result of the baseline calculation method output from the calculation method determination unit 128.

Thereby, also in the operational improvement effect calculation device 12, the operational improvement effect calculation unit 107 outputs the operational improvement effect data De at each evaluation target time to the display device 50, as a result of the operational improvement effect evaluated during the evaluation time period by the operational improvement effect calculation device 12, like the operational improvement effect calculation device 10 of the first illustrative embodiment. Thereby, also with the operational improvement effect calculation device 12, the user who uses the operational improvement effect calculation device 12 can check the minimum improvement effect obtained as a result of the improvement measures by comparing the baseline calculated by the baseline calculation unit 126 and the post-improvement KPI calculated by the similar data retrieval unit 124 or the statistical model preparation unit 129, like the operational improvement effect calculation device 10 of the first illustrative .

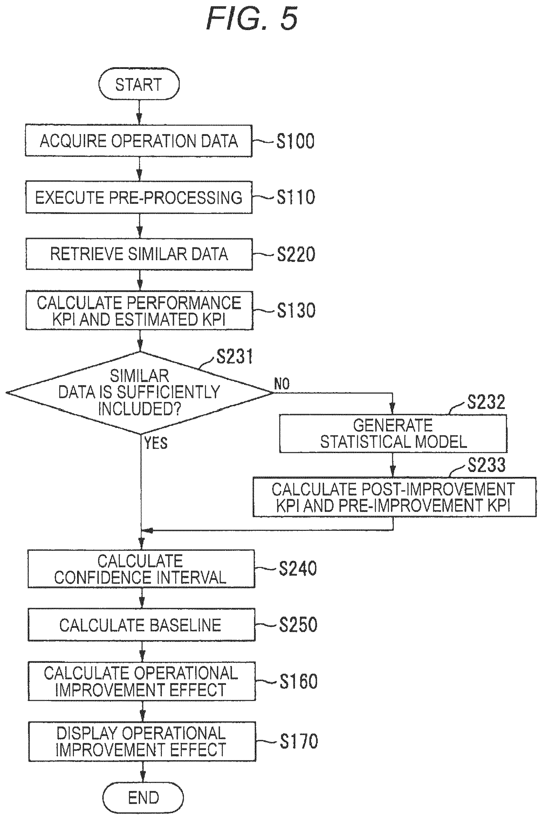

Subsequently, the operations of the operational improvement effect calculation device 12 are described. FIG. 5 is a flowchart depicting an example of a processing sequence that is to be performed in the operational improvement effect calculation device 12 in accordance with the second illustrative embodiment of the present disclosure. The processing of the flowchart shown in FIG. 5 depicting the operations of the operational improvement effect calculation device 12 includes the same processing as the processing of the flowchart shown in FIG. 2 depicting the operations of the operational improvement effect calculation device 10 of the first illustrative embodiment. Therefore, in the below, the processing, which is the same as the processing of the flowchart shown in FIG. 2 depicting the operations of the operational improvement effect calculation device 10 of the first illustrative embodiment, of the respective processing of the flowchart shown in FIG. 5 depicting the operations of the operational improvement effect calculation device 12 is denoted with the same step number, and the different processing is mainly described.

Like the flowchart shown in FIG. 2 depicting the operations of the operational improvement effect calculation device 10 of the first illustrative embodiment, in the flowchart shown in FIG. 5 depicting the operations of the operational improvement effect calculation device 12, the operational improvement effect calculation device 12 has the display device 50 embedded therein, and displays, on the display device 50, the image data, which is to explicitly express the calculated operational improvement effect data De, for the user who uses the operational improvement effect calculation device 10. Also, in the below, like the flowchart shown in FIG. 2 depicting the operations of the operational improvement effect calculation device 10 of the first illustrative embodiment, it is assumed that the time period, the retrieval parameter and the confidence interval parameter have been already designated by the user who uses the operational improvement effect calculation device 12.

When the operational improvement effect calculation device 12 starts the evaluation of the operational improvement effect in accordance with a user's instruction, the data acquisition unit 102 outputs the original data Dr, which is acquired from the plant operation database 20 and the weather database 30 via the network 40 and is included in the retrieval target time period and the evaluation time period indicated by the time period information Ip, to the pre-processing unit 10, in the processing of step S100. Then, the pre-processing unit 103 outputs the pre-processed data Dp obtained by executing the pre-processing for the original data Dr output from the data acquisition unit 102, to the similar data retrieval unit 124, the statistical model preparation unit 129, and the operational improvement effect calculation unit 107, in the processing of step S 110.

Continuously, the similar data retrieval unit 124 retrieves the pre-processed data Dp before performing the improvement measures (pre-processed data Dp of comparison target), which is similar to the pre-processed data Dp after performing the improvement measures (pre-processed data Dp of evaluation target), at each evaluation target time included in the pre-processed data Dp output from the pre-processing unit 103, based on the retrieval parameter Ps output from the processing receiving unit 101 (step S220). Here, when the retrieval parameter Ps output from the processing receiving unit 101 includes n (n: natural number, positive integer), as the number of retrieving the similar pre-processed data Dp (pre-processed data Dp of comparison target), the similar data retrieval unit 124 retrieves the n similar pre-processed data Dp before performing the improvement measures, and adds the information indicative of the degree of similarity to each of the n retrieved similar pre-processed data Dp before performing the improvement measures, in the processing of step S220.

Thereafter, the similar data retrieval unit 124 calculates a post-improvement KPI at each evaluation target time and each pre-improvement KPI corresponding to the post-improvement KPI at each evaluation target time, in the processing of step S130. Then, the similar data retrieval unit 124 outputs the retrieval result Rs1 including the calculated post-improvement KPI and pre-improvement KPI and the plurality of pre-processed data Dp before performing the improvement measures, which has been retrieved and the information indicative of the degree of similarity has been added thereto in the processing of step S220, to the calculation method determination unit 128. Here, in the processing of step S220, a case where the similar data retrieval unit 124 retrieves the n similar pre-processed data Dp before performing the improvement measures, which correspond to the pre-processed data Dp after performing the improvement measures at each of the evaluation target times, is possible. In this case, the similar data retrieval unit 124 outputs the retrieval result Rs1 including the calculated post-improvement KPI and pre-improvement KPI and the n similar pre-processed data Dp before performing the improvement measures, for which the pre-improvement KPI has been calculated and to which the information indicative of the degree of similarity has been added in the processing of step S220, to the calculation method determination unit 128.

Continuously, the calculation method determination unit 128 determines whether the similar pre-processed data Dp before performing the improvement measures is sufficiently included in the retrieval result Rs1 output from the similar data retrieval unit 124 (step S231). That is, the calculation method determination unit 128 determines whether to calculate the baseline for the pre-improvement KPI calculated by the similar data retrieval unit 124 or to calculate the baseline for the pre-improvement KPI calculated by the statistical model preparation unit 129, based on the pre-processed data Dp before performing the improvement measures included in the retrieval result Rs1. Here, for example, a case where the m (m: natural number, positive integer, m$\leq$Sn) similar pre-processed data Dp before performing the improvement measures are included in the retrieval result Rs1 output from the similar data retrieval unit 124 and the threshold of the predetermined number is Th (Th= natural number, positive integer) is possible. In this case, when the number m of the similar pre-processed data Dp before performing the improvement measures is equal to or larger than the number Th of threshold, the calculation method determination unit 128 determines that the similar pre-processed data Dp before performing the improvement measures is sufficiently included in the retrieval result Rs1. On the other hand, when the number m of the similar pre-processed data Dp before performing the improvement measures is smaller than the number Th of threshold, the calculation method determination unit 128 determines that the similar pre-processed data Dp before performing the improvement measures is not sufficiently included in the retrieval result Rs1.

The number Th of threshold may be designated by the user. In this case, the user may designate the number necessary to calculate the baseline for the pre-improvement KPI, as the number Th of threshold, considering the accuracy when evaluating the minimum improvement effect by the operational improvement effect calculation device 12.

As a result of the determination in step S231, when the similar pre-processed data Dp before performing the improvement measures is sufficiently included in the retrieval result Rs1 ("YES" in step S231), the calculation method determination unit 128 determines that the baseline is to be calculated for the pre-improvement KPI calculated by the similar data retrieval unit 124. Then, the calculation method determination unit 128 outputs the determination result, which indicates that the baseline is to be calculated for the pre-improvement KPI calculated by the similar data retrieval unit 124, to the statistical model preparation unit 129, the confidence interval calculation unit 125 and the baseline calculation unit 126, and outputs the retrieval result Rs2 to the confidence interval calculation unit 125 and the baseline calculation unit 126. Here, for example, a case where the m similar pre-processed data Dp before performing the improvement measures are included in the retrieval result Rs1 output from the similar data retrieval unit 124 is possible. In this case, the calculation method determination unit 128 outputs the retrieval result Rs2, in which at least the m similar pre-processed data Dp before performing the improvement measures are included, to the confidence interval calculation unit 125 and the baseline calculation unit 126. Thereafter, the operational improvement effect calculation device 12 proceeds to step S140.

On the other hand, as a result of the determination in step S231, when the similar pre-processed data Dp before performing the improvement measures is not sufficiently included in the retrieval result Rs1 ("NO" in step S231), the calculation method determination unit 128 determines that the baseline is to be calculated for the pre-improvement KPI calculated by the statistical model preparation unit 129. Then, the calculation method determination unit 128 outputs the determination result, which indicates that the baseline is to be calculated for the pre-improvement KPI calculated by the statistical model preparation unit 129, to the statistical model preparation unit 129, the confidence interval calculation unit 125 and the baseline calculation unit 126. At this time, the calculation method determination unit 128 may not output the retrieval result Rs2 to the confidence interval calculation unit 125 and the baseline calculation unit 126. Thereafter, the operational improvement effect calculation device 12 proceeds to step S232.

In this case, the statistical model preparation unit 129 prepares a statistical model on the basis of the pre-processed data Dp before performing the improvement measures in the retrieval target time period, which is included in the pre-processed data Dp output from the pre-processing unit 103 (step S232). Here, the statistical model preparation unit 129 prepares the statistical model by using the PLS regression, for example.

Continuously, the statistical model preparation unit 129 calculates the post-improvement KPI (this is an example of the second post-improvement KPI) and the pre-improvement KPI (this is an example of the second pre-improvement KPI), respectively (step S233). Here, the statistical model preparation unit 129 calculates the post-improvement KPI on the basis of the pre-processed data Dp after performing the improvement measures at the evaluation target time in the evaluation time period, which is included in the pre-processed data Dp output from the pre-processing unit 103. Also, the statistical model preparation unit 129 calculates (estimates) the pre-improvement KPI corresponding to the calculated post-improvement KPI by using the statistical model (regression coefficient) prepared in the processing of step SS232. Then, the statistical model preparation unit 129 outputs the estimation result Re, which includes the calculated post-improvement KPI at each evaluation target time, each pre-improvement KPI corresponding to the post-improvement KPI at each evaluation target time and the pre-processed data Dp before performing the improvement measures in the retrieval target time period, which has been used to prepare the statistical model in the processing of step S232, to the confidence interval calculation unit 125 and the baseline calculation unit 126.

Continuously, the confidence interval calculation unit 125 obtains the confidence interval (this is an example of the second confidence interval), in correspondence to the determination result of the baseline calculation method output from the calculation method determination unit 128 (step S240). Here, when the determination result, which indicates that the baseline is to be calculated for the pre-improvement KPI calculated by the similar data retrieval unit 124, is output from the calculation method determination unit 128, the confidence interval calculation unit 125 obtains the confidence interval of the pre-improvement KPI included in the retrieval result Rs2 output from the calculation method determination unit 128, based on the confidence interval parameter Pc output from processing receiving unit 101, in the processing of step S240. On the other hand, when the determination result, which indicates that the baseline is to be calculated for the pre-improvement KPI calculated by the statistical model preparation unit 129, is output from the calculation method determination unit 128, the confidence interval calculation unit 125 obtains the confidence interval of the pre-improvement KPI included in the estimation result Re output from the statistical model preparation unit 129, in the processing of step S240. Then, the confidence interval calculation unit 125 outputs the confidence interval information Ic, which includes information of an upper limit width (this is an example of the second upper limit width) of the obtained confidence interval and information of a lower limit width (this is an example of the second lower limit width) of the obtained confidence interval, to the baseline calculation unit 126.

Continuously, the baseline calculation unit 126 calculates a baseline (this is an example of the second baseline) for calculating the operational improvement effect, based on the confidence interval information Ic output from the confidence interval calculation unit 125, in correspondence to the determination result of the baseline calculation method output from the calculation method determination unit 128 (step S250). Here, when the determination result, which indicates that the baseline is to be calculated for the pre-improvement KPI calculated by the similar data retrieval unit 124, is output from the calculation method determination unit 128, the baseline calculation unit 126 calculates a baseline corresponding to the pre-improvement KPI included in the retrieval result Rs2 output from the calculation method determination unit 128, in the processing of step S250. On the other hand, when the determination result, which indicates that the baseline is to be calculated for the pre-improvement KPI calculated by the statistical model preparation unit 129, is output from the calculation method determination unit 128, the baseline calculation unit 126 calculates a baseline corresponding to the pre-improvement KPI included in the estimation result Re output from the statistical model preparation unit 129, in the processing of step S250. Then, the baseline calculation unit 126 outputs at least the post-improvement KPI and the pre-improvement KPI, which are included in the retrieval result Rs2 output from the calculation method determination unit 128 or the estimation result Re output from the statistical model preparation unit 129, and the calculated baseline data to the operational improvement effect calculation unit 107, in correspondence to the determination result of the baseline calculation method output from the calculation method determination unit 128.

Continuously, the operational improvement effect calculation unit 107 calculates the operational improvement effect at each evaluation target time (this is an example of the second evaluation result), based on the retrieval result Rs or estimation result Re and the baseline data output from the baseline calculation unit 126, generates the image data for explicitly expressing the calculated operational improvement effect at each evaluation target time and outputs the same to the display device 50, as the operational improvement effect data De, in the processing of step S160. Thereby, the display device 50 displays an image of the operational improvement effect data De output from the operational improvement effect calculation unit 107, in the processing of step S170.

By the above configuration and processing sequence, like the operational improvement effect calculation device 10 of the first illustrative embodiment, the operational improvement effect calculation device 12 of the second illustrative embodiment evaluates the effect (operational improvement effect) of the improvement measures performed in the plant with the conditions designated by the user by using the plant operation data and weather data included in the retrieval target time period and evaluation time period designated by the user. At this time, like the operational improvement effect calculation device 10 of the first illustrative embodiment, the operational improvement effect calculation device 12 of the second illustrative embodiment retrieves more than once the pre-improvement data similar to the post-improvement data. When the pre-improvement data, which is sufficiently similar to the post-improvement data, is sufficiently retrieved, the operational improvement effect calculation device 12 of the second illustrative embodiment calculates the minimum improvement effect (operational improvement effect) obtained as a result of the improvement measures, from the pre-improvement KPI and the baseline calculated from the retrieved pre-improvement data. Thereby, like the operational improvement effect calculation device 10 of the first illustrative embodiment, the operational improvement effect calculation device 12 of the second illustrative embodiment can evaluate the improvement effect (operational improvement effect) even when the plant to which the operational improvement effect calculation device 12 is applied is a plant such as a chemical plant and a microbial plant that is difficult to be clearly indicated by a statistical model or a characteristic formula.

Also, when the pre-improvement data, which is sufficiently similar to the post-improvement data, is not sufficiently retrieved, the operational improvement effect calculation device 12 of the second illustrative embodiment prepares the statistical model, and calculates the minimum improvement effect (operational improvement effect) obtained as a result of the improvement measures, from the pre-improvement KPI and the baseline calculated (estimated) using the prepared statistical model. That is, when it is thought that it is better to prepare the statistical model than to use the pre-improvement data, which is not sufficiently similar (has the low degree of similarity), the operational improvement effect calculation device 12 of the second illustrative embodiment calculates (estimates) the minimum improvement effect (operational improvement effect) obtained as a result of the improvement measures by using the statistical model. Thereby, even when an operation, in which the pre-improvement data is similar to the post-improvement data, is not performed, the operational improvement effect calculation device 12 of the second illustrative embodiment can evaluate the improvement effect (operational improvement effect).

Also, like the operational improvement effect calculation device 10 of the first illustrative embodiment, the operational improvement effect calculation device 12 of the second illustrative embodiment presents the user with the evaluated effect (operational improvement effect) of the improvement measures. Thereby, the user who uses the operational improvement effect calculation device 12 of the second illustrative embodiment can check the improvement effect obtained as a result of the improvement measures performed in the plant by the optimal method corresponding to the pre-improvement data.

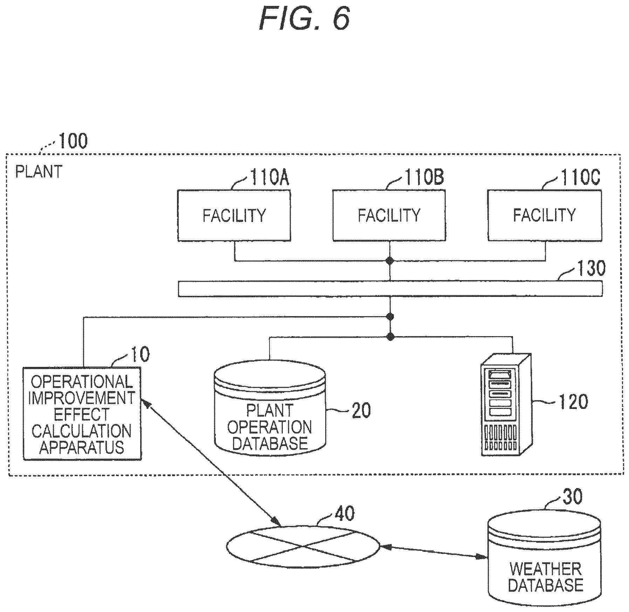

Here, an example where the operational improvement effect calculation device of the illustrative embodiment of the present disclosure is used for the plant is described. FIG. 6 depicts an example of a configuration of a plant in which the operational improvement effect calculation device of an illustrative embodiment of the present disclosure is used. FIG. 6 depicts an example of a plant 100 where three facilities of a facility 110A, a facility 110B and a facility 110C are arranged and a control system 120 such as a distributed control system (DCS) is configured to monitor and control operations of the respective facilities through a dedicated network 130 established in the plant 100. In the plant 100, data of operating statuses of the facilities and control contents of the facilities monitored by the control system 120 are stored in a plant operation database 20 connected to the dedicated network 130.

When using the operational improvement effect calculation device of the illustrative embodiment of the present disclosure for the plant 100 configured as described above, the operational improvement effect calculation device is connected to the dedicated network 130, for example. FIG. 6 depicts a case where the operational improvement effect calculation device 10 of the first illustrative embodiment is connected to the dedicated network 130. In the plant 100, the operational improvement effect calculation device 12 of the second illustrative embodiment may be used instead of the operational improvement effect calculation device 10 by connecting the operational improvement effect calculation device 12 to the dedicated network 130.

In the plant 100 configured as described above, the operational improvement effect calculation device 10 is configured to acquire the plant operation data, which is included in the retrieval target time period and the evaluation time period designated by the user, from the plant operation database 20 via the dedicated network 130. The operational improvement effect calculation device 10 is configured to acquire the weather data, which is included in the retrieval target time period and the evaluation time period designated by the user, from the weather database 30 via the dedicated network 130. As described above, the operational improvement effect calculation device 10 is configured to evaluate the effect (operational improvement effect) of the improvement measures performed in the plant with the conditions designated by the user by using the plant operation data and the weather data, and to present the user with the evaluation result. Thereby, the user who uses the operational improvement effect calculation device 10 can check the minimum improvement effect (operational improvement effect) obtained as a result of the improvement measures performed in the plant 100.

As described above, according to the illustrative embodiment for implementing the present disclosure, the operational improvement effect calculation device is configured to evaluate the effect (operational improvement effect) of the improvement measures performed in the plant with the conditions designated by the user by using the diverse plant operation-related data (plant operation data) from the past to the present, which are included in the retrieval target time period and the evaluation time period designated by the user, and the weather-related data (weather data), which can be considered as the external factor influencing the plant operation. At this time, according to the illustrative embodiment for implementing the present disclosure, the operational improvement effect calculation device is configured to calculate the pre-improvement KPI and the baseline by retrieving more than once the pre-improvement data similar to the post-improvement data. Then, in the illustrative embodiment for implementing the present disclosure, the operational improvement effect calculation device is configured to calculate the minimum improvement effect (operational improvement effect) obtained as a result of the improvement measures, from the calculated baseline and post-improvement KPI. Thereby, according to the illustrative embodiment for implementing the present disclosure, even when the plant to which the operational improvement effect calculation device is applied is a plant such as a chemical plant and a microbial plant that is difficult to be clearly indicated by the statistical model or the characteristic formula, it is possible to evaluate the improvement effect (operational improvement effect) and to present the user with the evaluated effect (operational improvement effect) of the improvement measures. Thereby, in the plant to which the operational improvement effect calculation device of the illustrative embodiment for implementing the present disclosure is applied, the user who uses the operational improvement effect calculation device can check the improvement effect obtained as a result of the improvement measures performed in the plant.

Also, according to the illustrative embodiment for implementing the present disclosure, the operational improvement effect calculation device is configured to determine whether the pre-improvement data similar to the post-improvement data has been sufficiently retrieved. In other words, according to the illustrative embodiment for implementing the present disclosure, the operational improvement effect calculation device is configured to check whether the plant operation data having the low degree of similarity is much included in the retrieved pre-improvement data. Also, according to the illustrative embodiment for implementing the present disclosure, when the pre-improvement data similar to the post-improvement data has not been sufficiently retrieved, the operational improvement effect calculation device prepares the statistical model, and calculates the minimum improvement effect (operational improvement effect) obtained as a result of the improvement measures, from the pre-improvement KPI and the baseline calculated (estimated) using the prepared statistical model. That is, according to the illustrative embodiment for implementing the present disclosure, when the plant operation data having the high degree of similarity has not been sufficiently retrieved, the operational improvement effect calculation device changes the method of evaluating the improvement effect (operational improvement effect) to the method of preparing the statistical model for evaluation, and then calculates the minimum improvement effect (operational improvement effect) obtained as a result of the improvement measures. Thereby, according to the illustrative embodiment for implementing the present disclosure, in the plant to which the operational improvement effect calculation device is applied, even when an operation, in which the pre-improvement data is similar to the post-improvement data, is not sufficiently performed, it is possible to evaluate the improvement effect (operational improvement effect) and to present the user with the evaluated effect (operational improvement effect) of the improvement measures. Thereby, in the plant to which the operational improvement effect calculation device of the illustrative embodiment for implementing the present disclosure is applied, the user who uses the operational improvement effect calculation device can check the improvement effect obtained as a result of the improvement measures performed in the plant by the optimal method corresponding to the plant operation data stored before performing the improvement measures.

Meanwhile, in the illustrative embodiment for implementing the present disclosure, the operational improvement effect calculation device 10 or the operational improvement effect calculation device 12 is configured to acquire the plant operation data from the plant operation database 20 via the network 40 or the dedicated network 130. However, the plant operation data that is to be used so as for the operational improvement effect calculation device 10 or the operational improvement effect calculation device 12 to evaluate the effect (operational improvement effect) of the improvement measures is not limited as being acquired from the plant operation database 20. For example, the operational improvement effect calculation device 10 or the operational improvement effect calculation device 12 may be configured to read a file (for example, a file of CSV format), in which the diverse plant operation-related data from the past to the present is recorded, as the plant operation data.

Also, in the illustrative embodiment for implementing the present disclosure, the operational improvement effect calculation device 10 or the operational improvement effect calculation device 12 is configured to evaluate the improvement effect (operational improvement effect) obtained as a result of the improvement measures by retrieving the pre-improvement data similar to the post-improvement data. That is, in the illustrative embodiment for implementing the present disclosure, the operational improvement effect calculation device 10 or the operational improvement effect calculation device 12 is configured to evaluate the improvement effect (operational improvement effect) obtained as a result of the improvement measures by comparing the pre-improvement data and post-improvement data in the same plant. However, the evaluation to be performed by the operational improvement effect calculation device 10 or the operational improvement effect calculation device 12 is not limited to the comparison before and after the improvement measures performed in the same plant. For example, the operational improvement effect calculation device 10 or the operational improvement effect calculation device 12 may be configured to acquire the plant operation data relating to the operations of the other plant or facility of the same type, instead of the pre-improvement data. In this case, the operational improvement effect calculation device 10 or the operational improvement effect calculation device 12 can perform evaluation of comparing in which of the plants or facilities of the same type the operation is more efficiently performed, by retrieving the similar plant operation data in the other plant or facility. More specifically, in the plant 100 of FIG. 6 in which the operational improvement effect calculation device 10 or the operational improvement effect calculation device 12 is used, when the facility 110A and the facility 110B are the facilities of the same type, the operational improvement effect calculation device 10 or the operational improvement effect calculation device 12 may acquire the current plant operation data of the facility 110B, instead of the past plant operation data of the facility 110A. In this case, in the plant 100 of FIG. 6, the operational improvement effect calculation device 10 or the operational improvement effect calculation device 12 can perform the evaluation of comparing in which of the facility 110A and the facility 110B the operation is more efficiently performed, by retrieving the current plant operation data of the facility 110B similar to the current plant operation data of the facility 110A.

Also, in the illustrative embodiment for implementing the present disclosure, the configuration aspect of the operational improvement effect calculation device 10 or the operational improvement effect calculation device 12 has not been described. However, the operational improvement effect calculation device 10 or the operational improvement effect calculation device 12 can be diversely configured. For example, the operational improvement effect calculation device 10 or the operational improvement effect calculation device 12 may be configured in a personal computer (PC) that is used by the user or in a portable terminal device such as a tablet terminal having a function of a portable information terminal (Personal Digital Assistant: PDA). Also, for example, the operational improvement effect calculation device 10 or the operational improvement effect calculation device 12 may be configured in a distributed control system or server apparatus arranged in the plant. In this case, the functions of the operational improvement effect calculation device 10 or the operational improvement effect calculation device 12 and the functions of the constitutional elements configuring the operational improvement effect calculation device 10 or the operational improvement effect calculation device 12 may be implemented as software of an operational improvement effect calculation program is executed on the personal computer, on the portable information terminal, the distributed control system or the server apparatus. Also, the personal computer or server apparatus configured to execute the software of the operational improvement effect calculation program may be incorporated into a cloud computing system.

For example, the diverse processing relating to the operational improvement effect calculation device of the illustrative embodiment may be executed by recording a program for implementing processing (an operational improvement effect calculation method), which is to be performed by the respective constitutional elements for implementing the functions of the operational improvement effect calculation device such as the pre-processing unit 103, the similar data retrieval unit 104 (including the similar data retrieval unit 124 provided to the operational improvement effect calculation device 12), the confidence interval calculation unit 105 (including the confidence interval calculation unit 125 provided to the operational improvement effect calculation device 12), the baseline calculation unit 106 (including the baseline calculation unit 126 provided to the operational improvement effect calculation device 12) and the operational improvement effect calculation unit 107 provided to the operational improvement effect calculation device 10, and the calculation method determination unit 128, the statistical model preparation unit 129 and the like provided to the operational improvement effect calculation device 12, in a computer-readable recording medium and enabling a computer system to read and execute the program recorded in the recording medium. The "computer system" may include an OS and hardware such as a peripheral device. Also, the "computer system" includes a homepage provision environment (or display environment) inasmuch as a WWW system is used. Also, the "computer-readable recording medium" includes a flexible disk, an optical disk, a ROM, a writable nonvolatile memory such as a flash memory, a portable medium such as a CD-ROM, and a storage device such as a hard disk drive to be embedded in the computer system.

Also, the "computer-readable recording medium" includes a medium configured to keep the program for predetermined time, such as a volatile memory (for example, DRAM (Dynamic Random Access Memory)) in the computer system that becomes a server or a client when the program is transmitted via the network such as the Internet or the communication line such as a phone line. Also, the program may be transmitted from a computer system having the program stored in the storage device to the other computer system via a transmission medium or by carrier waves in the transmission medium. Here, the "transmission medium" for transmitting the program means a medium having a function of transmitting the information, for example, the network (communication network) such as the Internet or the communication line such as a phone line. Also, the program may be a program for implementing a part of the above-described functions. Also, a so-called differential file (differential program) of implementing the above-described functions by a combination with a program already recorded in the computer system is possible.

Although the illustrative embodiments of the present disclosure have been described with reference to the drawings, the specific configurations are not limited to the illustrative embodiments and a variety of changes can be made without departing from the gist of the present disclosure.

The aforementioned embodiments are summarized as follows.

According to the present disclosure, the operational improvement effect calculation device includes the similar data retrieval unit, the confidence interval calculation unit, the baseline calculation unit and the evaluation calculation unit. The similar data retrieval unit is configured to retrieve, from the input plant operation data relating to the plant operation, the plant operation data points similar to the plant operation indicated by the evaluation target plant operation data, which is the plant operation data of an evaluation target, as the comparison target plant operation data. Also, the similar data retrieval unit is configured to calculate the first post-improvement evaluation indicator based on the evaluation target plant operation data and the first pre-improvement evaluation indicator based on each data point of the comparison target plant operation data. The confidence interval calculation unit is configured to calculate the first confidence interval on the basis of the comparison target plant operation data retrieved by the similar data retrieval unit. Then, the baseline calculation unit is configured to calculate the first baseline, which is a reference when comparing the first post-improvement evaluation indicator and the first pre-improvement evaluation indicator and corresponds to the first pre-improvement evaluation indicator, on the basis of the first confidence interval calculated by the confidence interval calculation unit. Then, the evaluation calculation unit is configured to calculate the first evaluation result on the plant, based on the first post-improvement evaluation indicator calculated by the similar data retrieval unit and the first baseline calculated by the baseline calculation unit.

Thereby, according to the operational improvement effect calculation device, it is possible to retrieve, from the plant operation data from the past to the present relating to the plant operation, the plant operation data of the past plant operation similar to the current plant operation, and to evaluate in the current plant operation what level the evaluation indicator was in the past plant operation by using the retrieved plant operation data. Thereby, the operational improvement effect calculation device can check how much the evaluation indicator of the current plant operation has been improved from the evaluation indicator of the past plant operation even for a plant that is difficult to be clearly indicated by a statistical model or a characteristic formula.

According to the present disclosure, the similar data retrieval unit provided to the operational improvement effect calculation device is configured to retrieve the comparison target plant operation data that includes a designated number of data points, based on the distance between the evaluation target plant operation data and each data point of the plant operation data. The similar data retrieval unit is configured to set, as the first pre-improvement evaluation indicator, the average evaluation indicator obtained by averaging the evaluation indicators of the respective data points of the comparison target plant operation data.

Thereby, the operational improvement effect calculation device can retrieve, as the comparison target plant operation data, the plant operation data having a high degree of similarity to the evaluation target plant operation data, and to calculate, as the first pre-improvement evaluation indicator, the evaluation indicator obtained by averaging the respective evaluation indicators of the plurality of retrieved data points of the comparison target plant operation data.

According to the present disclosure, the confidence interval calculation unit provided to the operational improvement effect calculation device is configured to calculate, as the evaluation indicator for confidence interval calculation, the evaluation indicator corresponding to each data point of the comparison target plant operation data, and to calculate the first confidence interval of each of the calculated evaluation indicators for confidence interval calculation. The confidence interval calculation unit is configured to set the difference between the upper limit value of the calculated first confidence interval and the first pre-improvement evaluation indicator, as the first upper limit width of the first confidence interval, and the difference between the lower limit value of the first confidence interval and the first pre-improvement evaluation indicator, as the first lower limit width of the first confidence interval.

Thereby, the operational improvement effect calculation device can calculate the first confidence interval in which the variation width of the evaluation indicator of each data point of the retrieved comparison target plant operation data is set within a range of a predetermined ratio. The operational improvement effect calculation device can divide the width of the calculated first confidence interval into the upper limit-side width and lower limit-side width of the first pre-improvement evaluation indicator.

According to the present disclosure, the baseline calculation unit provided to the operational improvement effect calculation device is configured to calculate the first baseline by applying the first upper limit width or the first lower limit width to the first pre-improvement evaluation indicator, in correspondence to the evaluation indicator of the plant indicated by the first post-improvement evaluation indicator. For example, in the case of an indicator indicating that the larger the value of the first post-improvement evaluation indicator is, the higher the effect is, the operational improvement effect calculation device calculates the first baseline by applying the first upper limit width to the first pre-improvement evaluation indicator, and in the case of an indicator indicating that the smaller the value of the first post-improvement evaluation indicator is, the higher the effect is, the operational improvement effect calculation device calculates the first baseline by applying the first lower limit width to the first pre-improvement evaluation indicator.

Thereby, the operational improvement effect calculation device can calculate the first baseline suitable for the first post-improvement evaluation indicator.

According to the present disclosure, the evaluation calculation unit provided to the operational improvement effect calculation device is configured to calculate the difference between the first post-improvement evaluation indicator and the first baseline, as the first evaluation result.

Thereby, the operational improvement effect calculation device can check how much the evaluation indicator of the current plant operation has been improved with respect to the past plant operation.

According to the present disclosure, the operational improvement effect calculation device of the present disclosure further includes the statistical model preparation unit and the determination unit. The statistical model preparation unit is configured to prepare the statistical model indicative of the plant operation, based on the input plant operation data. Also, the statistical model preparation unit is configured to calculate the second post-improvement evaluation indicator similar to the first post-improvement evaluation indicator, based on the evaluation target plant operation data, and to calculate the second pre-improvement evaluation indicator corresponding to the second post-improvement evaluation indicator by using the prepared statistical model. Also, the determination unit is configured to determine whether the sufficient number of data points of the comparison target plant operation data similar to the evaluation target plant operation data has been retrieved, based on the degree of similarity of each data points of the comparison target plant operation data to the evaluation target plant operation data, and to output the determination result. The confidence interval calculation unit is configured to calculate the second confidence interval, instead of the first confidence interval, in correspondence to the determination result determined by the determination unit. Then, the baseline calculation unit is configured to calculate, instead of the first baseline, the second baseline, which corresponds to the second pre-improvement evaluation indicator and is a reference when comparing the second post-improvement evaluation indicator and the second pre-improvement evaluation indicator, based on the second confidence interval calculated by the confidence interval calculation unit, in correspondence to the determination result determined by the determination unit. Then, the evaluation calculation unit is configured to set, as the first evaluation result, the second evaluation result on the plant calculated on the basis of the second post-improvement evaluation indicator calculated by the statistical model preparation unit and the second baseline calculated by the baseline calculation unit.

Thereby, the operational improvement effect calculation device can prepare the statistical model from the past plant operation data relating to the plant operation, and evaluate in the current plant operation what level the evaluation indicator was in the past plant operation by using the prepared statistical model. Thereby, even when the plant operation data of the past plant operation having the high degree of similarity to the plant operation data of the current plant operation is not sufficiently retrieved, the operational improvement effect calculation device can check how much the evaluation indicator of the current plant operation has been improved from the evaluation indicator of the past plant operation.

According to the present disclosure, the confidence interval calculation unit provided to the operational improvement effect calculation device calculates, as the first confidence interval, the second confidence interval when the determination result indicates that the sufficient number of the comparison target plant operation data similar to the evaluation target plant operation data has not been retrieved. Also, the baseline calculation unit provided to the operational improvement effect calculation device calculates, as the first baseline, the second baseline when the determination result indicates that the sufficient number of the comparison target plant operation data similar to the evaluation target plant operation data has not been retrieved.

Thereby, when it is determined that the plant operation data of the past plant operation having the high degree of similarity to the plant operation data of the current plant operation has not been sufficiently retrieved, the operational improvement effect calculation device can switch the calculation of the first confidence interval, which is to be performed by the confidence interval calculation unit, into the calculation of the confidence interval corresponding to the second pre-improvement evaluation indicator calculated using the statistical model prepared by the statistical model preparation unit. Also, when it is determined that the plant operation data of the past plant operation having the high degree of similarity to the plant operation data of the current plant operation has not been sufficiently retrieved, the operational improvement effect calculation device can switch the calculation of the first baseline, which is to be performed by the baseline calculation unit, into the calculation of the second baseline for comparing the second post-improvement evaluation indicator calculated using the statistical model prepared by the statistical model preparation unit and the second pre-improvement evaluation indicator.

According to the present disclosure, the confidence interval calculation unit provided to the operational improvement effect calculation device calculates, as the estimated error amount, the difference between the second post-improvement evaluation indicator and the second pre-improvement evaluation indicator, based on the plant operation data used for preparation of the statistical model and the second pre-improvement evaluation indicator, and calculates, as the second confidence interval, the confidence interval of the estimated error amount, when the determination result indicates that the sufficient number of the comparison target plant operation data similar to the evaluation target plant operation data has not been retrieved. Then, the confidence interval calculation unit is configured to set the upper limit value of the calculated second confidence interval, as the second upper limit width of the second confidence interval, and the lower limit value of the second confidence interval, as the second lower limit width of the second confidence interval. Also, the baseline calculation unit provided to the operational improvement effect calculation device calculates, as the first baseline, the second baseline by applying the second upper limit width or the second lower limit width to the second pre-improvement evaluation indicator, in correspondence to the evaluation indicator of the plant indicated by the second post-improvement evaluation indicator, when the determination result indicates that the sufficient number of the comparison target plant operation data similar to the evaluation target plant operation data has not been retrieved.

Thereby, even when it is determined that the plant operation data of the past plant operation having the high degree of similarity to the plant operation data of the current plant operation has not been sufficiently retrieved, the operational improvement effect calculation device can calculate, as the estimated error amount, the difference between the second post-improvement evaluation indicator and the second pre-improvement evaluation indicator, based on the plant operation data used for preparation of the statistical model and the second pre-improvement evaluation indicator calculated using the statistical model prepared by the statistical model preparation unit, and calculate the confidence interval of the estimated error amount, as the second confidence interval that can be handled similarly to the first confidence interval of the first pre-improvement evaluation indicator. Also, the operational improvement effect calculation device can divide the width of the calculated second confidence interval into the upper limit-side width and lower limit-side width of the second pre-improvement evaluation indicator. Also, even when it is determined that the plant operation data of the past plant operation having the high degree of similarity to the plant operation data of the current plant operation has not been sufficiently retrieved, the operational improvement effect calculation device can calculate the baseline suitable for the second first post-improvement evaluation indicator that can be handled similarly to the baseline for the first pre-improvement evaluation indicator.

**Claims**

**1.** An operational improvement effect calculation device comprising:

a similar data retrieval unit configured to retrieve, from inputted plant operation data relating to operations of a plant, comparison target plant operation data which includes more than one plant operation data points similar to a plant operation indicated by evaluation target plant operation data which is plant operation data of an evaluation target, and to calculate a first post-improvement evaluation indicator based on the evaluation target plant operation data and a first pre-improvement evaluation indicator based on each data point of the comparison target plant operation data;

a confidence interval calculation unit configured to calculate a first confidence interval, based on the comparison target plant operation data;

a baseline calculation unit configured to calculate a first baseline, which is a reference when comparing the first post-improvement evaluation indicator and the first pre-improvement evaluation indicator and corresponds to the first pre-improvement evaluation indicator, based on the first confidence interval; and

an evaluation calculation unit configured to calculate a first evaluation result on the plant, based on the first post-improvement evaluation indicator and the first baseline.

2. The operational improvement effect calculation device according to claim 1, wherein the similar data retrieval unit is configured:

to retrieve the comparison target plant operation data which includes a designated number of data points, based on a distance between the evaluation target plant operation data and each data point of the plant operation data, and

to set, as the first pre-improvement evaluation indicator, an average evaluation indicator obtained by averaging evaluation indicators of the respective data points of comparison target plant operation data.

3. The operational improvement effect calculation device according to claim 2, wherein the confidence interval calculation unit is configured:

to calculate an evaluation indicator for confidence interval calculation corresponding to each data point of the comparison target plant operation data and to calculate the first confidence interval of each of the calculated evaluation indicators for confidence interval calculation,

to set, as a first upper limit width of the first confidence interval, a difference between an upper limit value of the first confidence interval and the first pre-improvement evaluation indicator, and

to set, as a first lower limit width of the first confidence interval, a difference between a lower limit value of the first confidence interval and the first pre-improvement evaluation indicator.

4. The operational improvement effect calculation device according to claim 3, wherein the baseline calculation unit is configured to calculate the first baseline by applying the first upper limit width or the first lower limit width to the first pre-improvement evaluation indicator, according to an evaluation indicator of the plant indicated by the first post-improvement evaluation indicator.

5. The operational improvement effect calculation device according to claim 4, wherein the evaluation calculation unit is configured to calculate a difference between the first post-improvement evaluation indicator and the first baseline, as the first evaluation result.

6. The operational improvement effect calculation device according to claim 5, further comprising:

a statistical model preparation unit configured to prepare a statistical model indicative of a plant operation based on the inputted plant operation data, to calculate a second post-improvement evaluation indicator similar to the first post-improvement evaluation indicator based on the evaluation target plant operation data, and to calculate a second pre-improvement evaluation indicator corresponding to the second post-improvement evaluation indicator by using the statistical model; and

a determination unit configured to determine whether a sufficient number of data points of the comparison target plant operation data similar to the evaluation target plant operation data has been retrieved, based on a degree of similarity of each data point of the comparison target plant operation data to the evaluation target plant operation data, and to output a determination result,

wherein the confidence interval calculation unit is configured to calculate a second confidence interval, instead of the first confidence interval, according to the determination result,

wherein the baseline calculation unit is configured to calculate, instead of the first baseline, a second baseline, which corresponds to the second pre-improvement evaluation indicator and is a reference when comparing the second post-improvement evaluation indicator and the second pre-improvement evaluation indicator, based on the second confidence interval, according to the determination result, and

wherein the evaluation calculation unit is configured to set, as the first evaluation result, a second evaluation result calculated based on the second post-improvement evaluation indicator and the second baseline.

7. The operational improvement effect calculation device according to claim 6, wherein the confidence interval calculation unit calculates, as the first confidence interval, the second confidence interval when the determination result indicates that the sufficient number of data points of the comparison target plant operation data similar to the evaluation target plant operation data has not been retrieved, and

wherein the baseline calculation unit calculates, as the first baseline, the second baseline when the determination result indicates that the sufficient number of data points of the comparison target plant operation data similar to the evaluation target plant operation data has not been retrieved.

8. The operational improvement effect calculation device according to claim 7, wherein the confidence interval calculation unit calculates, as an estimated error amount, a difference between the second post-improvement evaluation indicator and the second pre-improvement evaluation indicator, based on the plant operation data used for preparation of the statistical model and the second pre-improvement evaluation indicator, and calculates, as the second confidence interval, a confidence interval of the estimated error amount, when the determination result indicates that the sufficient number of data points of the comparison target plant operation data similar to the evaluation target plant operation data has not been retrieved,

wherein the confidence interval calculation unit is configured:

to set an upper limit value of the second confidence interval, as a second upper limit width of the second confidence interval, and

to set a lower limit value of the second confidence interval, as a second lower limit width of the second confidence interval, and

wherein the baseline calculation unit calculates, as the first baseline, the second baseline by applying the second upper limit width or the second lower limit width to the second pre-improvement evaluation indicator, according to an evaluation indicator of the plant indicated by the second post-improvement evaluation indicator, when the determination result indicates that the sufficient number of data points of the comparison target plant operation data similar to the evaluation target plant operation data has not been retrieved.

9. An operational improvement effect calculation method, comprising:

retrieving, from inputted plant operation data relating to operations of a plant, comparison target plant operation data which includes more than one plant operation data points similar to a plant operation indicated by evaluation target plant operation data which is plant operation data of an evaluation target;

calculating a first post-improvement evaluation indicator based on the evaluation target plant operation data and a first pre-improvement evaluation indicator based on each data point of the comparison target plant operation data;

calculating a first confidence interval, based on the comparison target plant operation data;

calculating a first baseline, which is a reference when comparing the first post-improvement evaluation indicator and the first pre-improvement evaluation indicator and corresponds to the first pre-improvement evaluation indicator, based on the first confidence interval; and

calculating a first evaluation result on the plant, based on the first post-improvement evaluation indicator and the first baseline.

10. An operational improvement effect calculation program for causing a computer to execute a process, the process comprising:

retrieving, from inputted plant operation data relating to operations of a plant, comparison target plant operation data which includes more than one plant operation data points similar to a plant operation indicated by evaluation target plant operation data which is plant operation data of an evaluation target;

calculating a first post-improvement evaluation indicator based on the evaluation target plant operation data and a first pre-improvement evaluation indicator based on each data point of the comparison target plant operation data;

calculating a first confidence interval, based on the comparison target plant operation data;

calculating a first baseline, which is a reference when comparing the first post-improvement evaluation indicator and the first pre-improvement evaluation indicator and corresponds to the first pre-improvement evaluation indicator, based on the first confidence interval; and

calculating a first evaluation result on the plant, based on the first post-improvement evaluation indicator and the first baseline.

11. A non-transitory computer-readable recording medium that stores therein a program for causing a computer to execute a process, the process comprising:

retrieving, from inputted plant operation data relating to operations of a plant, comparison target plant operation data which includes more than one plant operation data points similar to a plant operation indicated by evaluation target plant operation data which is plant operation data of an evaluation target;

calculating a first post-improvement evaluation indicator based on the evaluation target plant operation data and a first pre-improvement evaluation indicator based on each data point of the comparison target plant operation data;

calculating a first confidence interval, based on the comparison target plant operation data;

calculating a first baseline, which is a reference when comparing the first post-improvement evaluation indicator and the first pre-improvement evaluation indicator and corresponds to the first pre-improvement evaluation indicator, based on the first confidence interval; and

calculating a first evaluation result on the plant, based on the first post-improvement evaluation indicator and the first baseline.

# FIG. 1

# FIG. 2

```
                    ( START )
                        │
                        ▼
        ┌──────────────────────────────┐
        │   ACQUIRE OPERATION DATA      │──S100
        └──────────────────────────────┘
                        │
                        ▼
        ┌──────────────────────────────┐
        │   EXECUTE PRE-PROCESSING      │──S110
        └──────────────────────────────┘
                        │
                        ▼
        ┌──────────────────────────────┐
        │   RETRIEVE SIMILAR DATA       │──S120
        └──────────────────────────────┘
                        │
                        ▼
        ┌──────────────────────────────┐
        │ CALCULATE POST-IMPROVEMENT KPI│──S130
        │   AND PRE-IMPROVEMENT KPI     │
        └──────────────────────────────┘
                        │
                        ▼
        ┌──────────────────────────────┐
        │         CALCULATE             │──S140
        │     CONFIDENCE INTERVAL       │
        └──────────────────────────────┘
                        │
                        ▼
        ┌──────────────────────────────┐
        │     CALCULATE BASELINE        │──S150
        └──────────────────────────────┘
                        │
                        ▼
        ┌──────────────────────────────┐
        │   CALCULATE OPERATIONAL       │──S160
        │     IMPROVEMENT EFFECT        │
        └──────────────────────────────┘
                        │
                        ▼
        ┌──────────────────────────────┐
        │    DISPLAY OPERATIONAL        │──S170
        │     IMPROVEMENT EFFECT        │
        └──────────────────────────────┘
                        │
                        ▼
                     ( END )
```

## FIG. 3

UPPER LIMIT
BASELINE

CONFIDENCE
INTERVAL

PRE-IMPROVEMENT
KPI

LOWER LIMIT
BASELINE

ENERGY INTENSITY

OPERATIONAL
IMPROVEMENT EFFECT

POST-
IMPROVEMENT
KPI

TIME

29

# FIG. 4

# FIG. 5

START

ACQUIRE OPERATION DATA ⎯ S100

EXECUTE PRE-PROCESSING ⎯ S110

RETRIEVE SIMILAR DATA ⎯ S220

CALCULATE PERFORMANCE KPI AND ESTIMATED KPI ⎯ S130

SIMILAR DATA IS SUFFICIENTLY INCLUDED? S231

NO

GENERATE STATISTICAL MODEL ⎯ S232

CALCULATE POST-IMPROVEMENT KPI AND PRE-IMPROVEMENT KPI ⎯ S233

YES

CALCULATE CONFIDENCE INTERVAL ⎯ S240

CALCULATE BASELINE ⎯ S250

CALCULATE OPERATIONAL IMPROVEMENT EFFECT ⎯ S160

DISPLAY OPERATIONAL IMPROVEMENT EFFECT ⎯ S170

END

*FIG. 6*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012038054 A
- JP 2017118795 A